# EUROPÄISCHE PATENTANMELDUNG

(11) **EP 3 281 982 A1**
(43) Veröffentlichungstag der Anmeldung: **14.02.2018**
(21) Anmeldenummer: 16183891.7
(22) Anmeldetag: 11.08.2016
(51) Int. Cl.: C08L 63/00, C08G 18/48, C08G 18/69, C08G 18/12, C08G 18/22, C08G 18/28

(54) **BLOCKIERTE POLYURETHAN-SCHLAGZÄHIGKEITSMODIFIKATOREN ZUR VERBESSERUNG DER SCHLAGZÄHIGKEIT EINKOMPONENTIGER TIEFTEMPERATURHÄRTENDER EPOXIDKLEBSTOFFE**

(71) Anmelder: Sika Technology AG, 6340 Baar (CH)
(72) Erfinder: Krüger, Christian, 8952 Schlieren (CH); Rheinegger, Urs, 8105 Regensdorf (CH)
(74) Vertreter: Sika Patent Attorneys

(57) **Zusammenfassung**

Schlagzähigkeitsmodifikator, welcher ein Isocyanat-terminiertes Polymer ist, dessen Isocyanatgruppen durch Umsetzung mit einem Blockierungsmittel teilweise oder vollständig blockiert sind, erhältlich durch A) Umsetzung von a) zwei oder mehr Polyolen umfassend a1) Polytetramethylenetherglycol und a2) mindestens ein Hydroxy-terminiertes Polybutadien, wobei der Gesamtanteil an Polytetramethylenetherglycol und Hydroxy-terminiertem Polybutadien mindestens 95 Gew.-%, bezogen auf das Gesamtgewicht der Polyole, beträgt, und b) mindestens einem acyclischen aliphatischen oder cycloaliphatischen Polyisocyanat in Gegenwart c) mindestens eines Katalysators unter Bildung eines Isocyanat-terminierten Polymers, und B) Umsetzung des in Schritt A) erhaltenen Isocyanat-terminierten Polymers mit d) mindestens einem Blockierungsmittel ausgewählt aus der Gruppe bestehend aus Phenolen, 2-Benzoxazolinonen und Pyrazolen in Gegenwart e) mindestens eines organischen Bismuth-Katalysators unter Bildung des teilweise oder vollständig blockierten Isocyanat-terminierten Polymers.

Bei Einsatz des Schlagzähigkeitsmodifikators in Epoxidharzklebstoffen kann eine gute Schlagzähigkeit auch bei tiefen Aushärtungstemperaturen erreicht werden.

## Beschreibung

### Technisches Gebiet

Die Erfindung betrifft blockierte polyurethan-basierte Schlagzähigkeitsmodifikatoren für tieftemperaturhärtende einkomponentige Epoxidharzklebstoffe.

### Stand der Technik

Herkömmliche Epoxidklebstoffe zeichnen sich zwar durch eine hohe mechanische Festigkeit, insbesondere eine hohe Zugfestigkeit aus. Bei schlagartiger Beanspruchung der Verklebung sind klassische Epoxidklebstoffe jedoch meist zu spröde und können deshalb unter Crashbedingungen, bei denen sowohl große Zug- als auch Schälbeanspruchungen auftreten, den Anforderungen, insbesondere der Automobilindustrie, bei weitem nicht genügen. Ungenügend sind diesbezüglich oft besonders die Festigkeiten bei hohen, insbesondere aber bei tiefen Temperaturen (z.B. < -10 °C).

Da es sich bei diesen Klebstoffen insbesondere um strukturelle Klebstoffe handelt und deshalb diese Klebstoffe strukturelle Teile verkleben, sind eine hohe Festigkeit und Schlagzähigkeit des Klebstoffes von größter Wichtigkeit.

Um die Schlagzähigkeit von Epoxidklebstoffen zu verbessern, werden diesen sogenannte Schlagzähigkeitsmodifikatoren zugesetzt. Ein Schlagzähigkeitsmodifikator, der auch als Toughener bezeichnet wird, ist in Strukturklebern einer der wichtigsten Formulierungsbestandteile. Er beeinflusst entscheidend wichtige Kenngrößen wie Schlagzähigkeit, Alterungsbeständigkeit, Haftung, ja eigentlich alle physikalischen Eigenschaften.

Es ist bereits eine breite Palette von Schlagzähigkeitsmodifikatoren für Epoxidharze bekannt. Dabei handelt es sich hauptsächlich um flüssige Copolymere oder vorgeformte Core-Shell Partikel. Ein wichtiger Typ von Schlagzähigkeitsmodifikatoren sind blockierte Polyurethan-Toughenerpolymere als Schlüsselkomponenten für crashfeste strukturelle Klebstoffe.

Epoxidharzklebstoffe härten unter üblichen Einbrennbedingungen von idealerweise etwa 180 °C aus. Blockierte Polyurethane werden als Schlagzähmodifikatoren in einkomponentigen Epoxidharzklebstoffen für den Automobilrohbau eingesetzt. Dabei wird der Klebstoff zusammen mit der auf die zu verklebenden Teile aufgebrachten Elektrotauchlackierung eingebrannt bzw. ausgehärtet. Durch den Trend zu tieferen Einbrandtemperaturen für die Lackierung und veränderten Fahrzeugkonzepten, wie z.B. Plastikteile im Automobilrohbau und gemischte Aluminium-Stahl-Karosserien, werden einkomponentige Epoxidklebstoffe mit niedrigeren Aushärtungstemperaturen benötigt. Die Epoxidklebstoffe mit den üblichen Schlagzähmodifikatoren weisen aber bei tiefen Aushärtungstemperaturen (130°C, 140°C) eine geringere Schlagzähigkeit auf als die unter Standardtemperaturen (ca. 175°C) gehärteten Epoxidklebstoffe.

Eine besondere Herausforderung liegt nun hierbei einen Epoxidharzklebstoff bereitzustellen, der eine ausreichende Schlagzähigkeit im Hinblick auf tiefe Aushärtungsbedingungen aufweist.

### Darstellung der Erfindung

Die Aufgabe der vorliegenden Erfindung bestand daher in der Bereitstellung von Schlagzähigkeitsmodifikatoren, die die vorstehend beschriebenen Probleme des Standes der Technik überwinden. Insbesondere sollten Schlagzähigkeitsmodifikatoren für Epoxidharz-Klebstoffe bereitgestellt werden, die eine gute Schlagzähigkeit auch bei tiefen Aushärtungstemperaturen im Bereich von 120°C-150°C bei einer maximalen Härtungsdauer von 30 min gewährleisten. Insbesondere soll auch eine gute Schlagzähigkeit bei tiefen Temperaturen von unter -10°C, z.B. -30°C, erhalten bleiben.

Ferner sollen gute mechanische Eigenschaften der Klebstoffe, die den erfindungsgemäßen Schlagzähigkeitsmodifikator enthalten, erreicht werden, z.B. hinsichtlich E-Modul, Bruch- und Zugfestigkeit, Zugscherfestigkeit, Winkelschälfestigkeit und insbesondere Schlagschälfestigkeit. Diese verbesserten mechanischen Eigenschaften sollen auch bei tiefen Temperaturen (<-10°C) erhalten bleiben. Zudem sollen die Epoxidklebstoffe eine hohe Lagerstabilität aufweisen.

Es wurde überraschenderweise gefunden, dass spezielle blockierte polyurethan-basierte Schlagzähigkeitsmodifikatoren, bei deren Herstellung eine organische Bismuthverbindung als Katalysator der Reaktion der Isocyanatgruppen mit dem Blockierungsmittel eingesetzt wird, die Schlagzähigkeit der Epoxidharz-Zusammensetzung auch bei niedrigeren Aushärtungstemperaturen deutlich erhöhen können. Zudem muss mit Einsatz der organische Bismuthverbindung als Katalysator das Blockierungsmittel nicht mehr in deutlichem Überschuss eingesetzt werden.

Dementsprechend betrifft die Erfindung einen Schlagzähigkeitsmodifikator, welcher ein Isocyanat-terminiertes Polymer ist, dessen Isocyanatgruppen durch Umsetzung mit einem Blockierungsmittel teilweise oder vollständig blockiert sind, welcher erhältlich ist durch
A) Umsetzung von a) zwei oder mehr Polyolen umfassend a1) Polytetramethylenetherglycol und a2) mindestens ein Hydroxy-terminiertes Polybutadien, wobei der Gesamtanteil an Polytetramethylenetherglycol und Hydroxy-terminiertem Polybutadien mindestens 95 Gew.-%, bezogen auf das Gesamtgewicht der Polyole, beträgt, und b) mindestens einem cycloaliphatischen oder acyclischen aliphatischen Polyisocyanat in Gegenwart c) mindestens eines Katalysators unter Bildung eines Isocyanat-terminierten Polymers, und
B) Umsetzung des in Schritt A) erhaltenen Isocyanat-terminierten Polymers mit d) mindestens einem Blockierungsmittel ausgewählt aus der Gruppe bestehend aus Phenolen, 2-Benzoxazolinonen und Pyrazolen in Gegenwart e) mindestens eines organischen Bismuth-Katalysators unter Bildung des teilweise oder vollständig blockierten Isocyanat-terminierten Polymers.

Die erfindungsgemäßen Schlagzähigkeitsmodifikatoren zeigen überraschenderweise eine verbesserte Schlagzähigkeit, insbesondere Tieftemperaturschlagzähigkeit, in einkomponentigen Epoxidharzklebstoffen, die bei tiefer Temperatur ausgehärtet werden.

Insgesamt werden verbesserte mechanischen Eigenschaften, wie E-Modul, Bruch- und Zugfestigkeit, Zugscherfestigkeit, Winkelschälfestigkeit und insbesondere Schlagschälfestigkeit erhalten, die auch bei tiefen Temperaturen (<-10°C) erhalten bleiben. Zudem weisen die mit den erfindungsgemäßen Schlagzähigkeitsmodifikatoren versetzten Epoxidklebstoffe eine hohe Lagerstabilität auf.

Die Erfindung betrifft auch ein Verfahren zur Herstellung dieser Schlagzähigkeitsmodifikatoren, deren Verwendung und diese Schlagzähigkeitsmodifikatoren enthaltende Epoxidharzformulierungen. Bevorzugte Ausführungsformen sind in den abhängigen Ansprüchen wiedergegeben.

### Weg zur Ausführung der Erfindung

Üblicherweise werden für einkomponentige Epoxidharzklebstoffe Aushärtungstemperaturen von etwa 175°C verwendet. Unter tieftemperaturhärtenden (low bake) einkomponentigen Epoxidharzklebstoffen werden im Folgenden hitzehärtende Epoxidharzklebstoffe verstanden, die bei niedrigeren Temperaturen im Bereich von 120 bis 150°C bei einer Aushärtungsdauer von bis zu 30 min ausgehärtet werden können. Eine Aushärtung bei höheren Temperaturen ist ebenfalls möglich.

Unter Tieftemperaturschlagzähigkeit wird die Schlagzähigkeit eines gehärteten Klebstoffs bei einer Temperatur von unter -10 °C, insbesondere bei -30 °C, verstanden.

Die Vorsilbe Poly in Ausdrücken wie Polyol oder Polyisocyanat bedeutet, dass die Verbindung zwei oder mehr der genannten Gruppen aufweist. Ein Polyol ist somit eine Verbindung mit zwei oder mehr Hydroxygruppen. Ein Polyisocyanat ist eine Verbindung mit zwei oder mehr Isocyanatgruppen. Dementsprechend ist ein Diol bzw. ein Diisocyanat eine Verbindung mit zwei Hydroxygruppen bzw. zwei Isocyanatgruppen.

Ein Hydroxy-terminiertes Polymer ist ein Polymer, das als Endgruppen Hydroxygruppen aufweist. Ein Isocyanat-terminiertes Polymer ist ein Polymer, das als Endgruppen Isocyanatgruppen aufweist. Bei dem erfindungsgemäßen Polymer sind diese Isocyanatgruppen teilweise oder vollständig blockiert.

Eine organische Metallverbindung ist eine Metallverbindung, die mindestens einen organischen Liganden aufweist.

Der Schlagzähigkeitsmodifikator gemäß der Erfindung ist ein Isocyanat-terminiertes Polymer, dessen Isocyanatgruppen durch Umsetzung mit einem Blockierungsmittel teilweise oder vollständig blockiert sind.

Das Isocyanat-terminierte Polymer ist erhältlich durch Umsetzung von a) zwei oder mehr Polyolen umfassend a1) Polytetramethylenetherglycol und a2) mindestens ein Hydroxy-terminiertes Polybutadien, wobei der Gesamtanteil an Polytetramethylenetherglycol und Hydroxy-terminiertem Polybutadien mindestens 95 Gew.-%, bezogen auf das Gesamtgewicht der Polyole, beträgt, und b) mindestens einem acyclischen aliphatischen oder cycloaliphatischen Polyisocyanat in Gegenwart c) mindestens eines Katalysators unter Bildung eines Isocyanat-terminierten Polymers.

Die Umsetzung von Polyolen und Polyisocyanaten im Allgemeinen ist eine übliche Reaktion zur Bildung von Polyurethanen. Das gebildete Isocyanat-terminierte Polymer ist somit insbesondere ein Isocyanat-terminiertes Polyurethan-Polymer.

Die zwei oder mehr Polyole zur Herstellung des Isocyanat-terminierten Polymers umfassen Polytetramethylenetherglycol. Es können ein oder mehrere Polytetramethylenetherglycole eingesetzt werden. Polytetramethylenetherglycol wird auch als Polytetrahydrofuran oder PTMEG bezeichnet. PTMEG kann z.B. durch Polymerisation von Tetrahydrofuran, z.B. über saure Katalyse, hergestellt werden. Die Polytetramethylenetherglycole sind insbesondere Diole.

Polytetramethylenetherglycole sind im Handel erhältlich, z. B. die PolyTHF^{®}-Produkte von BASF wie PolyTHF^{®}2000, PolyTHF^{®}2500 CO oder PolyTHF^{®}3000 CO, die Terathane^{®}-Produkte von Invista B.V oder die Polymeg^{®} Produkte von LyondellBasell.

Die OH-Funktionalität des eingesetzten Polytetramethylenetherglycols liegt bevorzugt im Bereich von etwa 2, z.B. im Bereich von 1,9 bis 2,1. Dies ist durch die kationische Polymerisation des Ausgangsmonomeren Tetrahydrofuran gegeben.

Vorteilhaft sind Polytetramethylenetherglycole mit OH-Zahlen zwischen 170 mg/KOH g bis 35 mg KOH/g, bevorzugt im Bereich von 100 mg KOH/g bis 40 mg KOH/g, und ganz besonders bevorzugt 70 bis 50 mg KOH/g. Sofern nicht anders angegeben, wird in der vorliegenden Anmeldung die OH-Zahl titrimetrisch gemäß DIN 53240 bestimmt. Hierbei wird die Hydroxylzahl durch Acetylierung mit Essigsäureanhydrid und nachfolgender Titration des überschüssigen Essigsäureanhydrids mit alkoholischer Kalilauge bestimmt. Mit Kenntnis der Difunktionalität können aus den titrimetrisch ermittelten Hydroxylzahlen die OH-Äquivalentgewichte beziehungsweise das mittlere Molekulargewicht des eingesetzten Polytetramethylenetherglycols bestimmt werden.

Vorteilhaft in der vorliegenden Erfindung eingesetzte Polytetramethylenetherglycole weisen bevorzugt ein mittleres Molekulargewicht im Bereich von 500 bis 5000 g/mol, bevorzugter 1000 bis 3000 g/mol und besonders bevorzugt im Bereich von 1.500 bis 2.500 g/mol, insbesondere etwa 2000 g/mol, auf. Die Angaben beziehen sich auf die Berechnung des Molekulargewichts aus den titrimetrisch bestimmten Hydroxylzahlen wie vorstehend angegeben, wobei eine Funktionalität von 2 für PTMEG angenommen wird. Diese Bestimmungsmethode wird auch üblicherweise von den Produzenten dieser Polymere verwendet.

Die zwei oder mehr Polyole zur Herstellung des Isocyanat-terminierten Polymers umfassen ferner mindestens ein Hydroxy-terminiertes Polybutadien. Es können auch Mischungen von zwei oder mehr Hydroxy-terminierten Polybutadienen eingesetzt werden.

Das oder die Hydroxy-terminierten Polybutadiene zur Herstellung des Isocyanat-terminierten Polymers sind insbesondere solche, die durch radikalische Polymerisation von 1,3-Butadien hergestellt werden, wobei z.B. ein Azonitril oder Wasserstoffperoxid als Initiator verwendet wird, sowie deren Hydrierungsprodukte. Hydroxy-terminierte Polybutadiene sind im Handel erhältlich, z.B. die Poly bd®- Produkte von Cray Valley wie Poly bd® R45V, Polyvest^{®}HT von Evonik sowie Hypro^{®}2800X95HTB von Emerald Performance Materials LLC.

Das Hydroxy-terminierte Polybutadien weist bevorzugt ein Zahlenmittel des Molekulargewichts (Mn), z.B. bestimmt durch Gel-Permeations-Chromatographie (GPC) mit THF als Eluent und Kalibration mit 1,4-Polybutadiene-Standards, von weniger als 15.000 bevorzugt weniger als 5.000, auf, wobei das Mn bevorzugt im Bereich von 2000 bis 4000 g/mol liegt. Die OH-Funktionalität des Hydroxy-terminierten Polybutadiens liegt bevorzugt im Bereich von 1,7 bis 2,8, bevorzugt von 2,4 bis 2,8.

Weiter bevorzugt sind Hydroxy-terminierte Polybutadiene mit einem Acrylnitril-Anteil von weniger als 15 %, vorzugsweise weniger als 5 % insbesondere bevorzugt weniger als 1 %, insbesondere bevorzugt von weniger als 0.1 %. Am meisten bevorzugt sind Hydroxy-terminierte Polybutadiene frei von Acrylnitril. Dies ist insbesondere für höhere Werte in Bezug auf E-modul, Zugfestigkeit, Zugscherfestigkeit und Schlagschälfestigkeit (insbesondere bei tiefen Temperaturen und geringer Aushärtungstemperatur) sowie eine tiefere Viskosität und eine höhere Lagerstabilität vorteilhaft.

Bezogen auf das Gesamtgewicht der zur Herstellung des Isocyanat-terminierten Polymers eingesetzten Polyole beträgt der Gesamtanteil an Polytetramethylenetherglycol und Hydroxy-terminiertem Polybutadien mindestens 95 Gew.-% und bevorzugt mindestens 98 Gew.-%. In einer bevorzugten Ausführungsform werden nur Polytetramethylenetherglycol und Hydroxy-terminiertes Polybutadien als Polyole eingesetzt. Alle in dieser Anmeldung angeführten Merkmale bezüglich des Schlagzähigkeitsmodifikators gelten explizit entsprechend für Reaktionsprodukte, bei denen als Polyole nur Polytetramethylenetherglycol und Hydroxy-terminiertes Polybutadien eingesetzt werden.

Neben Polytetramethylenetherglycol und Hydroxy-terminiertem Polybutadien kann gegebenenfalls mindestens ein davon verschiedenes Polyol eingesetzt werden, insbesondere als Kettenverlängerer fungierende Polyole wie bevorzugt Tetramethylenglycol (TMP) oder ein trifunktionelles Polyetherpolyol auf Polybutylenoxidbasis wie z.B. DOW VORAPEL T5001, in geringen Mengen von weniger als 5 Gew.-%, bevorzugt weniger als 2 Gew.-%, bezogen auf das Gesamtgewicht der eingesetzten Polyole, hinzugegeben werden. Der Kettenverlängerer ist vorzugsweise ein Polyol mit einem Molekulargewicht Mn von nicht mehr als 1500 g/mol, bevorzugter nicht mehr als 1000 g/mol. Hierdurch kann die isocyanatseitige Kettenverlängerung mit einer polyolseitigen Kettenverlängerung kombiniert werden.

Das Gewichtsverhältnis von a1) Polytetramethylenetherglycol zu a2) dem mindestens einen Hydroxy-terminierten Polybutadien (a1/a2) liegt bevorzugt im Bereich von 70/30 bis 30/70, bevorzugter von 60/40 bis 40/60 und ganz besonders bevorzugt im Bereich von etwa 50/50.

Zur Herstellung des Isocyanat-terminierten Polymers können ein oder mehrere acyclische aliphatische oder cycloaliphatische Polyisocyanate eingesetzt werden. Aliphatische Polyisocyanate umfassen acyclische und cyclische aliphatische Polyisocyanate. Cyclische aliphatische Polyisocyanate werden auch als cycloaliphatische Polyisocyanate bezeichnet. Bevorzugt ist das Polyisocyanat ein Diisocyanat.

Bevorzugte Diisocyanate sind acyclische aliphatische oder cycloaliphatische Diisocyanate, wobei es sich bevorzugt um monomere Diisocyanate oder Dimere davon handelt. Beispiele sind 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexa-methylendiisocyanat (TMDI), 1,10-Decamethylendiisocyanat, 1,12-Dodecamethylen-diisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H6TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H12MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate wie 3,6-Bis-(9-isocyanatononyl)-4,5-di-(1-heptenyl)-cyclohexen (Dimetyldiisocyanat) oder Dimere davon, sowie beliebige Mischungen der vorgenannten Isocyanate. Besonders bevorzugt sind HDI und IPDI und deren Dimere.

Durch Variation der Stöchiometrie der Reaktionspartner und/oder einer abgestuften Umsetzung der Edukte kann die Struktur oder Kettenlänge der Isocyanat-terminierten Polymere variiert werden.

Einerseits können z.B. in einer ersten Stufe, in der nur ein Teil der Polyisocyanate eingesetzt wird, durch einen Überschuss der OH-Gruppen bezogen auf die NCO-Gruppen OH-funktionelle Polymere mit unterschiedlich langen Ketten erhalten werden. Solche kettenverlängerte Polyole enthalten UrethanGruppen in der Kette und können in einer zweiten Stufe mit restlichen Polyisocyanaten weiter umgesetzt werden, so dass Isocyanat-terminierte Polymere entstehen. Anderseits können durch einen Unterschuss der OH-Gruppen bezogen auf die NCO-Gruppen NCO-funktionelle Polymere mit unterschiedlich langen Ketten erhalten werden.

Das in Schritt A) gebildete Isocyanat-terminierte Polymer weist bevorzugt durchschnittlich 2 bis 4 Polyoleinheiten pro Polymer auf.

Zur Herstellung des Isocyanat-terminierten Polymers sind die Anteile an Polyol und Polyisocyanate insbesondere so, dass die Isocyanatgruppen im stöchiometrischen Überschuss gegenüber den Hydroxygruppen vorliegen, wobei das molare Verhältnis von Isocyanatgruppen zu Hydroxygruppen z.B. größer 1,3, vorzugsweise größer 3 zu 2 ist, z.B. im Bereich von 3 zu 1 bis 3 zu 2, bevorzugt nahe im Bereich von 2 zu 1.

Für die Umsetzung der zwei oder mehr Polyole und dem mindestens einen aliphatischen Polyisocyanat in Schritt A) wird ein Katalysator eingesetzt. Der Katalysator beschleunigt die Reaktion der Isocyanate mit den Polyolen. Dabei handelt es sich vorzugsweise um organische Metallverbindungen als Katalysatoren, insbesondere Organozinnverbindungen, sowie Gemische davon.

Der Katalysator bevorzugt zweckmäßigerweise die NCO:OH-Reaktion gegenüber der NCO:Wasser-Reaktion, was zum Beispiel bei Fettsäuresalzen von

Zinn(II) der Fall ist. Der Katalysator soll sich durch eine hohe katalytische Aktivität und Selektivität hinsichtlich der Urethanisierungsreaktion, d.h. der Reaktion von alkoholischen OH-Gruppen mit Isocyanatgruppen, auszeichnen und so einen raschen und durch Feuchtigkeit möglichst wenig gestörten Aufbau eines mechanisch hochwertigen Polyurethan-Polymers aus polyfunktionellen Alkoholen (Polyolen) und Polyisocyanaten ermöglichen. Zum anderen soll der Katalysator eine ausreichende Hydrolyseresistenz besitzen, um unter üblichen Lagerbedingungen, d.h. bei Raumtemperatur oder bei leicht erhöhten Temperaturen, über mehrere Monate in einer restwasserhaltigen Polyol-Zusammensetzung ohne starken Aktivitätsverlust erhalten zu bleiben. Weiterhin soll der Katalysator die thermische Beständigkeit des ausgehärteten Polyurethan-Polymers möglichst wenig herabsetzen. Überdies soll der Katalysator bei Raumtemperatur oder bei leicht erhöhten Temperaturen flüssig sein bzw. in den Polyurethan-Ausgangsmaterialien oder in Weichmachern gut löslich sein, damit er in bei Raumtemperatur härtenden, lösungsmittelfreien Systemen auf einfache Weise eingesetzt werden kann. Letztendlich soll der Katalysator eine möglichst geringe Giftigkeit aufweisen.

Als Katalysator für die Umsetzung in Schritt A) wird eine organische Zinnverbindung bevorzugt. Beispiele sind Dibutylzinndiacetat, Dibutylzinndichlorid, Dibutylzinndiacetylacetonat, Dioctylzinndithioglycolat, Dioctylzinnlaurat und besonders bevorzugt Dibutylzinndilaurat. Gegebenenfalls können als Katalysator auch Zirkonium-, Zinn-, Eisen-, Vanadium- oder Indiumsalze eingesetzt werden.

Dieser mindestens eine Katalysator für die Umsetzung in Schritt A) liegt hierbei bevorzugt in einer Menge im Bereich von 0,5 Gew.-% bis 0,001 Gew.-%, bevorzugter von 0,025 Gew.-% bis 0,005 Gew.-%, bezogen auf die Gesamtmasse des blockierten Schlagzähigkeitsmodifikators, vor.

Bei dem erfindungsgemäßen Schlagzähigkeitsmodifikator sind die Isocyanatgruppen des Isocyanatgruppen-terminierten Polymers durch Umsetzung mit einem Blockierungsmittel in Schritt B) teilweise oder vollständig blockiert, wobei bevorzugt mindestens 80%, bevorzugt mindestens 96%, der Isocyanatgruppen des Isocyanat-terminierten Polymers blockiert sind. In einer besonders bevorzugten Ausführungsform sind die Isocyanatgruppen im Wesentlichen vollständig blockiert, d.h. zu mindestens 99%. Bei dem einen Blockierungsmittel kann es sich um ein oder mehrere Blockierungsmittel handeln.

Die Blockierung von Isocyanatgruppen durch entsprechende Blockierungsmittel, die thermoreversibel mit Isocyanatgruppen reagieren können, ist auf dem Gebiet eine gängige Maßnahme und der Fachmann kann sie ohne weiteres durchführen. Der Fachmann kennt eine breite Anzahl geeigneter Blockierungsmittel bzw. Blockierungsgruppen, z.B. aus den Übersichtsartikeln von Douglas A. Wick in Progress in Organic Coatings 36 (1999), 148-172 und in Progress in Organic Coatings 41 (2001), 1-83, worauf hiermit verwiesen wird.

Bei dem mindestens einen Blockierungsmittel handelt es sich um eine Verbindung mit einer gegenüber Isocyanat reaktiven Gruppe. Bei dem Blockierungsmittel handelt es sich insbesondere um eine protonenaktive Verbindung, die auch als H-acide Verbindung bezeichnet wird. Der Wasserstoff des Blockierungsmittels, der mit einer Isocyanatgruppe reagieren kann (acider Wasserstoff), ist dabei üblicherweise häufig an einem Sauerstoffatom oder einem Stickstoffatom gebunden. Hierbei kann das Blockierungsmittel über den aciden Wasserstoff in einer nucleophilen Additionsreaktion mit freien Isocyanatfunktionalitäten reagieren.

Verbindungen mit SH-reaktiven Protonen wie Dodecanthiol oder 2-Mercaptopyridin, Verbindungen mit CH₂-reaktiven Protonen wie Ethylacetoacetat und Guanidine wie Tetramethylguanidin sind als Blockierungsmittel für die vorliegende Erfindung nicht geeignet.

Das mindestens eine Blockierungsmittel ist ausgewählt aus der Gruppe bestehend aus Phenolen, 2-Benzoxazolinonen und Pyrazolen, wobei Phenole besonders bevorzugt sind. Ortho-substituierte Phenole sind aber in der Regel weniger geeignet.

Die Pyrazole können z.B. die folgende Strukturformel aufweisen 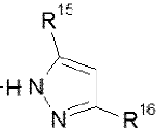 worin R¹⁵ und R¹⁶ jeweils unabhängig voneinander H, Alkyl, z.B. C₁-C₄-Alkyl, Aryl oder Aralkyl sind.

Die Phenole können Monophenole oder Polyphenole wie Bisphenole sein, z.B. Phenole der Formel HO-R1^{,} wobei R¹ eine ein- oder mehrkernige substituierte oder unsubstituierte Aromatengruppe ist, welche gegebenenfalls eine oder mehrere weitere aromatische Hydroxylgruppen aufweist.

Als Substituent R¹O von Phenolen der Formel HO-R¹ sind Monophenole oder Polyphenole, insbesondere Bisphenole, nach Entfernung eines phenolischen Wasserstoffatoms bevorzugt, insbesondere solche der folgenden Strukturformeln

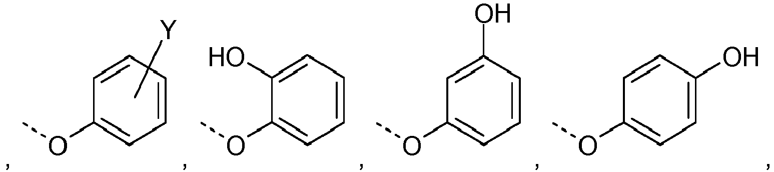

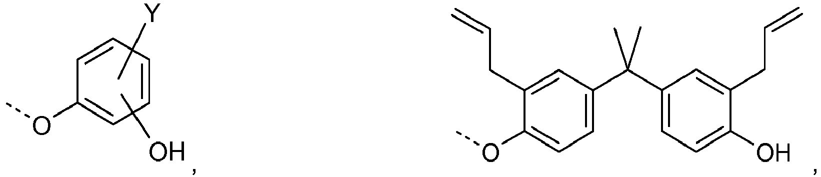

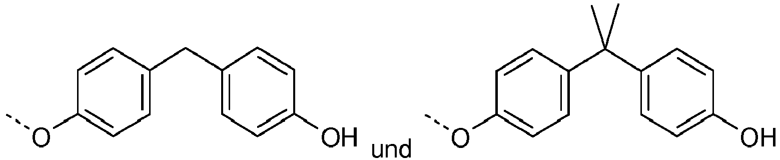

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter C₁₅-Alkylrest mit 1 bis 3 Doppelbindungen bevorzugt.

Beispiele für geeignete Blockierungsmittel sind Phenol, Kresol, Resorcinol, Brenzkatechin, 3-Pentadecenylphenol (Cardanol aus Cashewnuss-Schalen-Öl), Nonylphenol, 3-Methoxyphenol, 4-Methoxyphenol, mit Styrol oder Dicyclopentadien umgesetzte Phenole, Bisphenol A, Bisphenol F, 2,2'-Diallyl-bisphenol-A, 2-Benzooxazolinon und 3,5-Dimethylpyrazol. Das am meisten bevorzugte Blockierungsmittel ist 4-Methoxyphenol.

Die Menge an eingesetztem Blockierungsmittel wird bevorzugt so gewählt, dass das Äquivalentverhältnis der Isocyanatgruppen des Isocyanat-terminierten Polymers zu den mit Isocyanatgruppen reaktiven Gruppen (H-acide Gruppen, z.B. OH oder NH) des Blockierungsmittels für Schritt B) im Bereich von 1,5 bis 0,7, bevorzugter von 1,2 bis 0,8, und ganz besonders bevorzugt nahe bei 1:1, liegt.

Die Umsetzung des in Schritt A) erhaltenen Isocyanat-terminierten Polymers mit dem mindestens einen Blockierungsmittel in Schritt B) erfolgt in Anwesenheit eines organischen Bismuth-Katalysators. Der Katalysator beschleunigt die Reaktion des Blockierungsmittels mit gegenüber Isocyanat reaktiven Gruppen mit den Isocyanatgruppen.

Es können eine oder mehrere organische Bismuthverbindungen als Katalysator in Schritt B) eingesetzt werden, wobei Bi(III)-verbindungen bevorzugt sind. Die mindestens eine organische Bismuthverbindung umfasst oder ist besonders bevorzugt Bismuth(III)-neodecanoat oder Bismuth(III)-2-ethylhexanoat. Besonders bevorzugt ist die organische Bismuthverbindung Bismuth(III)-neodecanoat.

Die Menge des katalytisch aktiven Zentrums, insbesondere Bismuth(III), des mindestens einen organischen Bismuth-Katalysators, der in Schritt B) eingesetzt wird, liegt bevorzugt im Bereich von 0,5 Gew.-% bis 0,002 Gew.-%, bevorzugt von 0,1 Gew.-% bis 0,004 Gew.-%, insbesondere bevorzugt von 0,03 Gew.-% bis 0,005 Gew.-%, bezogen auf die Gesamtmasse des blockierten Schlagzähigkeitsmodifikators.

Die vorliegende Erfindung betrifft weiterhin ein Verfahren zur Herstellung eines Schlagzähigkeitsmodifikators, umfassend
A) die Umsetzung von a) zwei oder mehr Polyolen umfassend a1) Polytetramethylenetherglycol und a2) mindestens ein Hydroxy-terminiertes Polybutadien, wobei der Gesamtanteil an Polytetramethylenetherglycol und Hydroxy-terminiertem Polybutadien mindestens 95 Gew.-%, bezogen auf das Gesamtgewicht der Polyole, beträgt, und b) mindestens einem acyclischen oder cycloaliphatischen Polyisocyanat in Gegenwart c) mindestens eines Katalysators unter Bildung eines Isocyanat-terminierten Polymers, und
B) die Umsetzung des in Schritt A) erhaltenen Isocyanat-terminierten Polymers mit d) mindestens einem Blockierungsmittel ausgewählt aus der Gruppe bestehend aus Phenolen, 2-Benzoxazolinonen und Pyrazolen in Gegenwart e) mindestens eines organischen Bismuth-Katalysators unter Bildung des teilweise oder vollständig blockierten Isocyanat-terminierten Polymers.

Alle vorstehenden Angaben zum erfindungsgemäßen Schlagzähigkeitsmodifikator gelten naturgemäß entsprechend für das erfindungsgemäße Verfahren und umgekehrt.

Die Umsetzung von Polyolen und Polyisocyanaten und die dafür geeigneten Bedingungen sind dem Fachmann vertraut. Für die Herstellung des Isocyanat-terminierten Polymers in Schritt A) wird eine Mischung der Polyole und der Polyisocyanate in Anwesenheit des Katalysators wie vorstehend beschrieben umgesetzt. Gegebenenfalls kann auch eine stufenweise Zugabe der Ausgangskomponenten erfolgen, z.B. kann wie bereits vorstehend erläutert das oder die Polyole mit einem Teil an Polyisocyanat umgesetzt werden, um zunächst ein Hydroxyl-terminiertes Polymer zu erhalten, und anschließend restliches Polyisocyanat zugesetzt werden, um das Isocyanat-terminierte Polymer zu erhalten.

Für die Umsetzung in Schritt A) wird ein Katalysator zugesetzt. Beispiele für geeignete Katalysatoren sind wie vorstehend beschrieben z.B. organische Metallverbindungen, wie organische Zinnverbindungen, bevorzugt Dibutylzinndilaurat (DBTL). Gegebenenfalls können auch Stabilisatoren, z.B. für PTMEG, zugegeben werden, z.B. Butylhydroxytoluol (BHT).

Die Umsetzung in Schritt A) wird zweckmäßigerweise bei erhöhter Temperatur durchgeführt, z.B. bei einer Temperatur von mindestens 60°C, bevorzugt mindestens 80°C, insbesondere bei einer Temperatur im Bereich von 80°C bis 100 °C, bevorzugt um ca. 90°C. Die Dauer hängt naturgemäß stark von den gewählten Reaktionsbedingungen ab und kann z.B. im Bereich von 15 min bis 6h liegen. Der Fortgang bzw. die Beendigung der Reaktion kann ohne weiteres anhand der Analyse des Isocyanatgehalts in der Reaktionsmischung kontrolliert werden.

Für die Umsetzung in Schritt B) wird wie vorstehend beschrieben mindestens eine organische Bismuthverbindung als Katalysator zugesetzt, bevorzugt Bi(III)-neodecanoat.

Die Blockierung der Isocyanatgruppen mit dem Blockierungsmittel und die dafür geeigneten Bedingungen sind dem Fachmann ebenfalls vertraut. Die Umsetzung in Schritt B) wird zweckmäßigerweise bei erhöhter Temperatur durchgeführt, z.B. bei einer Temperatur von mindestens 90°C, bevorzugt mindestens 100°C, insbesondere bei einer Temperatur im Bereich von 100 bis 135°C, bevorzugt um ca. 110°C. Die Dauer hängt naturgemäß stark von den gewählten Reaktionsbedingungen ab und kann z.B. im Bereich von 15 min bis 24 h liegen. Der Fortgang bzw. die Beendigung der Reaktion kann ohne weiteres anhand der Analyse des Isocyanatgehalts in der Reaktionsmischung kontrolliert werden.

Die in Schritt A) und Schritt B) erhaltenen Produkte können wie sie sind verwendet bzw. weiterverwendet werden, d.h. eine Aufarbeitung ist im Allgemeinen nicht erforderlich.

Der erfindungsgemäße Schlagzähigkeitsmodifikator ist insbesondere für den Einsatz in einem einkomponentigen (1 K) Epoxidharzklebstoff geeignet. Dadurch kann der 1 K Epoxidharzklebstoff auch bei niederer Temperatur ausgehärtet werden, wobei eine verbesserte Schlagzähigkeit, insbesondere Tieftemperaturschlagzähigkeit, erreicht wird.

Es handelt sich daher insbesondere um einen tieftemperaturhärtenden (low bake) einkomponentigen Epoxidharzklebstoff. Der 1 K Epoxidharzklebstoff ist insbesondere hitzehärtend und kann flüssig, pastös oder fest sein. Der 1 K Epoxidharzklebstoff ist bevorzugt ein struktureller bzw. crashfester Klebstoff, z.B. für den Automobilbau, OEM-Produkte, EP/PU-Hybride, Strukturschäume aus Epoxidharzsystemen (wie Sika Reinforcer^{®}) oder Reparaturanwendungen.

Die erfindungsgemäße 1 K Epoxidharzklebstoff umfasst a) mindestens ein Epoxidharz, b) mindestens einen Härter für Epoxidharze und c) den Schlagzähigkeitsmodifikator gemäß der Erfindung.

Der erfindungsgemäße Schlagzähigkeitsmodifikator wurde bereits vorstehend beschrieben. Der Anteil des erfindungsgemäßen Schlagzähigkeitsmodifikators in dem 1 K Epoxidharzklebstoff kann in breiten Bereichen variieren, liegt aber z.B. in einem Bereich von 5 bis 60 Gew.-%, bevorzugt von 10 bis 25 Gew.-%, bezogen auf das Gesamtgewicht der Epoxidharzzusammensetzung.

Bei dem in dem Epoxidharzklebstoff enthaltenen Epoxidharz kann es sich um jedes übliche auf diesem Gebiet eingesetzte Epoxidharz handeln. Epoxidharze werden z.B. aus der Umsetzung einer Epoxidverbindung wie z.B. Epichlorhydrin mit einem mehrfunktionellen aliphatischen oder aromatischen Alkohol, d.h. einem Diol, Triol oder Polyol, erhalten. Es können ein oder mehrere Epoxidharze eingesetzt werden. Das Epoxidharz ist bevorzugt ein Epoxid-Flüssigharz und/oder ein Epoxid-Festharz.

Als Epoxid-Flüssigharz oder Epoxid-Festharz gelten vorzugsweise Diglycidylether, wie z.B. der Formel (I) 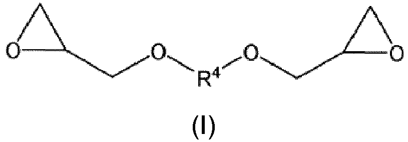 worin R⁴ für einen zweiwertigen aliphatischen oder einkernigen aromatischen oder einen zweikernigen aromatischen Rest steht.

Beispiele für Diglycidylether sind insbesondere
- Diglycidylether von difunktionellen gesättigten oder ungesättigten, verzweigten oder unverzweigten, zyklischen oder offenkettigen C₂-C₃₀-Alkoholen, wie z.B. Ethylenglykol-, Butandiol-, Hexandiol-, Oktandiolgylcidylether, Cyclohexandimethanoldigylcidylether, Neopentylglycoldiglycidylether;
- Diglycidylether von difunktionellen, nieder- bis hochmolekularen Polyetherpolyolen wie z.B. Polyethylenglycol-diglycidylether, Polypropylenglycoldiglycidylether;
- Diglycidylether von difunktionellen Diphenolen und gegebenenfalls Triphenolen, wobei hierunter nicht nur reine Phenole, sondern gegebenenfalls auch substituierte Phenole verstanden werden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen. Als Bisphenole und gegebenenfalls Triphenolen sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoat, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-Bis(p-hydroxyphenyl)phthalid, 5,5-Bis(4-hydroxyphenyl)hexahydro-4,7-methanoindan, Phenolpthalein, Fluorescein, 4,4'-[Bis-(hydroxyphenyl)-1,3-phenylenbis-(1-methyl-ethyliden)] (=Bisphenol-M), 4,4'-[Bis-(hydroxyphenyl)-1,4-phenylenbis-(1 -methyl-ethyliden)] (=Bisphenol-P), 2,2'-Diallyl-bisphenol-A, Diphenole und Dikresole hergestellt durch Umsetzung von Phenolen oder Kresolen mit Diisopropylidenbenzol, Phloroglucin, Gallsäureester, Phenol- oder Kresolnovolake mit -OH-Funktionalität von 2,0 bis 3,5 sowie alle Isomeren der vorgenannten Verbindungen.

Besonders bevorzugte Epoxidharze sind Epoxid-Flüssigharze der Formel (A-I) und Epoxid-Festharze der Formel (A-II).

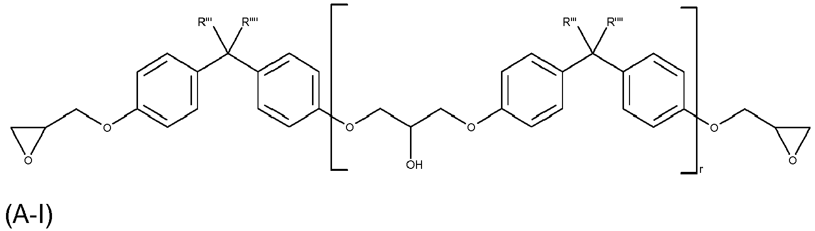

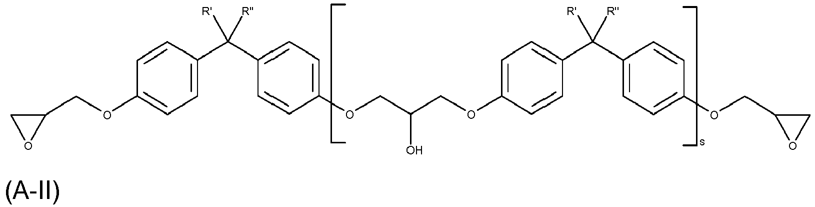

Hierbei stehen die Substituenten R', R", R"' und R"" unabhängig voneinander entweder für H oder CH₃. Weiterhin steht der Index r für einen Wert von 0 bis 1. Bevorzugt steht r für einen Wert von kleiner als 0,2. Weiterhin steht der Index s für einen Wert von >1, insbesondere > 1,5, insbesondere von 2 bis 12. Verbindungen der Formel (A-II) mit einem Index s von größer 1 bis 1,5 werden vom Fachmann als Semisolid-Epoxidharze bezeichnet. Für die hier vorliegende Erfindung werden sie ebenfalls als Festharze betrachtet. Bevorzugt sind jedoch Epoxid-Festharze im engeren Sinn, d.h. wo der Index s einen Wert von > 1,5 aufweist.

Derartige Epoxid-Festharze sind kommerziell erhältlich beispielsweise von Dow oder Huntsman oder Hexion. Handelsübliche Epoxid-Flüssigharze der Formel (A-I) sind z.B. als Araldite® GY 250, Araldite® PY 304, Araldite® GY 282 (Huntsman, bzw. Hexion) oder D.E.R.™ 331 oder D.E.R.™ 330 (Dow) oder D.E.R.™ 332 (Dow) oder Epikote 828 (Hexion) erhältlich.

Bevorzugt handelt es beim Diglycidylether der Formel (I) um ein Epoxid-Flüssigharz, insbesondere um ein Epoxid-Flüssigharz der Formel (A-I), insbesondere ein Diglycidylether von Bisphenol-A (BADGE), von Bisphenol-F sowie von Bisphenol-A/F. Ferner sind auch epoxidierte Novolake bevorzugte Epoxidharze.

Der Epoxidharzklebstoff enthält ferner einen Härter für das Epoxidharz. Der Härter ist insbesondere ein Härter, welcher durch erhöhte Temperatur aktiviert wird. Diese Härter werden als latente Härter beschrieben. Unter "erhöhter Temperatur" wird hier in der Regel z.B. eine Temperatur über 100°C, in der Regel über 110°C oder bevorzugter im Bereich von 120 bis 150°C verstanden.

Als thermisch aktivierbare Härtersysteme für die beschriebenen tieftemperaturhärtenden Epoxidharzklebstoffe eignen sich insbesondere Kombinationen aus Dicyandiamid als Härter und einem latenten Co-Härter, womit zweckmäßig im Bereich von 120°C bis 150°C eine Härtung erzielt werden kann.

Derartige Co-Härter, die häufig auch als Dicyandiamidbeschleuniger bezeichnet werden, sind dem Fachmann bestens bekannt und umfassen latente Amine und Aminderivate wie Biguanide, Epoxy-Amin-Addukte, inkapsulierte Amine oder Aminderivate (d.h. Amine oder Aminderivate eingelagert in einer Schutzmatrix), Komplexe aus Aminen und Bortrifluorid, organische Säuredihydrazide oder Imidazolderivate wie 2-Ethyl-2-methylimidazol, 2-Isopropylimidazol, 2-Hydroxy-N-(2-(2-(2-hydroxyphenyl)-4,5-dihydroimidazol-1-yl)ethyl)benzamid. Besonders bevorzugt sind tert. Aminderivate wie 2,4,6-Tris(dimethylaminomethyl)phenol oder Benzyldimethylamine, die zur Erzielung einer Latenz in einer Matrix aus polymeren Phenolen wie PVP (Poly(p-vinylphenol) oder Novolak eingelagert werden. Ein bekanntes Beispiel ist 2,4,6-Tris((dimethylaminomethyl)phenol in einer Poly(p-vinylphenol)-Matrix wie sie zum Beispiel in US 4713432 und EP 0197892 beschrieben werden. Weitere besonders wirksame Co-Härter umfasst die Klasse der substituierten Harnstoffe, wie z.B. 3-Chlor-4-methylphenylharnstoff (Chlortoluron), oder Phenyldimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron).

Vorteilhaft beträgt der Gesamtanteil des Härters bzw. der Kombination von Härter und Co-Härter für Epoxidharze 2 bis 14 Gew.-%, vorzugsweise 5 bis 10 Gew.-%, bezogen auf das Gewicht der gesamten Zusammensetzung.

Als Härter für Epoxidharze können in einer alternativen Ausführungsform insbesondere z.B. Polyamine, Polymercaptane, Polyamidoamine, aminofunktionelle Polyamin/Polyepoxid-Addukte eingesetzt werden, wie sie dem Fachmann als Härter bestens bekannt sind

Der Epoxidharzklebstoff kann gegebenenfalls weiterhin mindestens einen zusätzlichen optionalen Schlagzähigkeitsmodifikator umfassen, welcher verschieden von dem bereits beschriebenen erfindungsgemäßen Schlagzähigkeitsmodifikator ist. Die zusätzlichen Schlagzähigkeitsmodifikatoren können fest oder flüssig sein.

In einer Ausführungsform ist dieser zusätzliche Schlagzähigkeitsmodifikator ein Flüssigkautschuk, welcher ein carboxyl- oder epoxidterminiertes Acrylnitril/ Butadien-Copolymer oder ein Derivat davon ist. Derartige Flüssigkautschuke sind z.B. unter dem Namen Hypro® (früher Hycar®) CTBN und CTBNX und ETBN von Emerald Performance Materials LLC kommerziell erhältlich. Als Derivate sind insbesondere Epoxidgruppen aufweisende Elastomermodifizierte Präpolymere, wie sie unter der Produktlinie Polydis®, vorzugsweise aus der Produktlinie Polydis® 36.., von der Firma Struktol® (Schill + Seilacher Gruppe, Deutschland) oder unter der Produktlinie Albipox® (Evonik Hanse GmbH, Deutschland) kommerziell vertrieben werden, geeignet. In einer weiteren Ausführungsform ist der Schlagzähigkeitsmodifikator ein Polyacrylatflüssigkautschuk, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind z.B. unter der Bezeichnung 20208-XPA von Dow (früher Rohm und Haas) erhältlich.

Es ist dem Fachmann klar, dass natürlich auch Mischungen von Flüssigkautschuken verwendet werden können, insbesondere Mischungen von Carboxyl- oder Epoxid-terminierten Acrylnitril/Butadien-Copolymeren oder Derivaten davon mit Epoxid-terminierten Polyurethanpräpolymeren.

In einer weiteren Ausführungsform ist der zusätzliche Schlagzähigkeitsmodifikator ein fester Schlagzähigkeitsmodifikator, welcher ein Blockcopolymer ist. Das Blockcopolymer wird erhalten aus einer anionischen oder kontrollierten radikalischen Polymerisation von Methacrylsäureester mit mindestens einem weiteren eine olefinisch Doppelbindung aufweisenden Monomer. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA)-Copolymere, erhältlich z.B. unter dem Namen GELOY® 1020 von GE Plastics. Besonders bevorzugte Blockcopolymere sind Blockcopolymere aus Methacrylsäuremethylester, Styrol und Butadien. Derartige Blockcopolymere sind beispielsweise als Triblockcopolymere unter der Gruppenbezeichnung SBM von Arkema erhältlich.

In einer weiteren Ausführungsform ist der zusätzliche Schlagzähigkeitsmodifikator ein Core-Shell-Polymer. Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell-Struktur bildet sich entweder spontan durch Entmischen eines Blockcopolymers oder ist durch die Polymerisationsführung als Latex oder Suspensions-polymerisation mit nachfolgender Pfropfung vorgegeben. Bevorzugte Core-Shell-Polymere sind sogenannte MBS-Polymere, welche kommerziell unter dem Handelsnamen Clearstrength® von Arkema, Paraloid® von Dow (früher Rohm und Haas) oder F-351® von Zeon erhältlich sind.

Besonders bevorzugt sind Core-Shell-Polymerpartikel, die bereits als getrockneter Polymerlatex vorliegen. Beispiele hierfür sind GENIOPERL® M23A von Wacker mit Polysiloxankern und Acrylatschale, strahlungsvernetzte Kautschukpartikel der NEP Reihe, hergestellt von Eliokem, oder Nanoprene® von Lanxess oder Paraloid® EXL von Dow. Weitere vergleichbare Beispiele für Core-Shell-Polymere werden unter dem Namen Albidur® von Evonik Hanse GmbH, Deutschland, angeboten. Ebenso geeignet sind nanoskalige Silikate in Epoxid-Matrix, wie sie unter dem Handelsnamen Nanopox von Evonik Hanse GmbH, Deutschland, angeboten werden.

In einer weiteren Ausführungsform ist der zusätzliche Schlagzähigkeitsmodifikator ein Umsetzungsprodukt eines carboxylierten festen Nitrilkautschuks mit überschüssigem Epoxidharz.

Es hat sich gezeigt, dass in dem Epoxidharzklebstoff vorteilhaft ein oder mehrere zusätzliche Schlagzähigkeitsmodifikatoren vorhanden sind. Als besonders vorteilhaft hat sich gezeigt, dass ein derartiger weiterer Schlagzähigkeitsmodifikator ein Epoxidgruppenden aufweisender Schlagzähigkeitsmodifikator der Formel (II) ist.

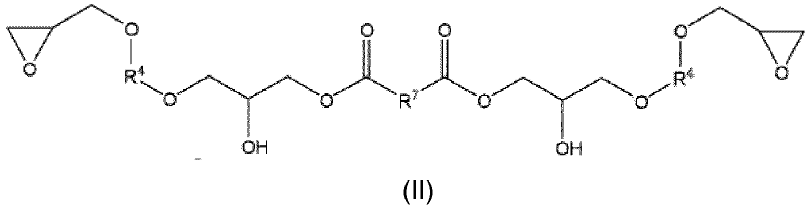

Hierin ist R⁷ ein zweiwertiger Rest eines Carboxylgruppen-terminierten Butadien/ Acrylnitril-Copolymers (CTBN) nach Entfernung der terminalen Carboxylgruppen. Der Rest R⁴ ist wie vorstehend für Formel (I) definiert und beschrieben. Insbesondere steht R⁷ für einen Rest, der durch formelle Entfernung der Carboxyl-Gruppen eines unter dem Namen Hypro® CTBN von Emerald Performance Materials LLC kommerziell vertriebenen Carboxylgruppen-terminierten Butadien/Acrylonitril-Copolymers CTBN, erhalten wird. R⁷ ist bevorzugt ein zweiwertiger Rest der Formel (II').

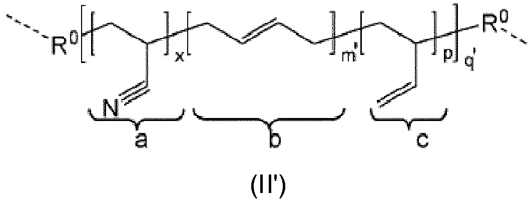

R⁰ steht hierbei für einen linearen oder verzweigten Alkylenrest mit 1 bis 6 C-Atomen, insbesondere mit 5 C-Atomen, welcher gegebenenfalls mit ungesättigten Gruppen substituiert ist. In einer besonders zu erwähnenden Ausführungsform stellt der Substituent R0 einen Rest der Formel (II-a) dar. 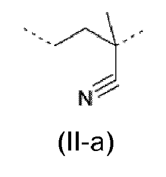 Weiterhin steht der Index q' für einen Wert zwischen 40 und 100, insbesondere zwischen 50 und 90. Die Bezeichnungen b und c stehen für die Strukturelemente, welche von Butadien stammen und a für das Strukturelement, welches von Acrylnitril stammt. Die Indices x, m', und p' stellen ihrerseits Werte dar, die das Verhältnis der Strukturelement a, b und c zueinander beschreiben. Der Index x steht für Werte von 0,05 bis 0,3, der Index m' für Werte von 0,5-0,8, der Index p für Werte von 0,1 - 0,2 mit der Maßgabe, dass die Summe von x, m' und p gleich 1 ist.

Dem Fachmann ist verständlich, dass die in Formel (II') gezeigte Struktur als vereinfachte Darstellung zu verstehen sind. Somit können die Bausteine a, b und c jeweils zufällig, abwechselnd oder blockweise zueinander angeordnet sein. Insbesondere stellt somit Formel (II') nicht zwangsläufig ein Triblock-Copolymer dar.

Die Herstellung des Schlagzähigkeitsmodifikator der Formel (II) erfolgt durch die Umsetzung eines Carboxylgruppen-terminierten Butadien/Acrylonitril-Copolymers (CTBN), insbesondere der Formel (III), wobei die Substituenten wie in Formel (II) definiert sind, mit einem vorstehend erläuterten Diglycidylether der Formel (I) in einem stöchiometrischen Überschuss des Diglycidylethers, d.h. dass das Verhältnis der Glycidylether-Gruppen zu den COOH-Gruppen ist größer gleich 2.

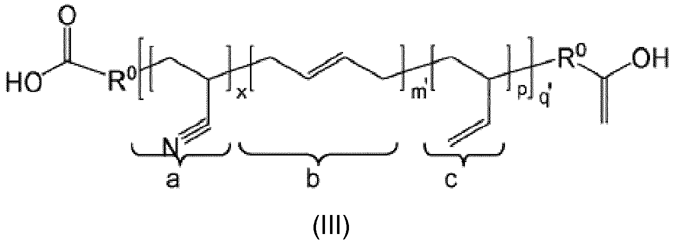

Der Anteil des oder der vorstehend beschriebenen zusätzlichen Schlagzähigkeitsmodifikatoren, der/die von dem Epoxid-terminierten Schlagzähigkeitsmodifikator im erfindungsgemäßen Flüssigkautschuk verschieden ist, beträgt z.B. 0 bis 45 Gew.-%, vorzugsweise 1 bis 45 Gew.-%, insbesondere 3 bis 35 Gew.-%, bezogen auf das Gewicht der gesamten Zusammensetzung.

Der Epoxidharzklebstoff kann selbstverständlich noch andere Bestandteile umfassen. Insbesondere sind dies Füllstoffe, Reaktivverdünner, wie Epoxidgruppen-tragende Reaktivverdünner, Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, Tenside, Entschäumer und Haftvermittler. Für diese Additive können alle in der Technik bekannten in den üblichen Mengen eingesetzt werden.

Bei den Füllstoffen handelt es sich z.B. bevorzugt um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff sind sowohl die organisch beschichteten als auch die unbeschichteten kommerziell erhältlichen und dem Fachmann bekannten Formen gemeint.

In einer weiteren Ausführungsform werden Schichtmineralien, insbesondere organische Ionen ausgetauschte Schichtmineralien als Füllstoffe eingesetzt. Das ionengetauschte Schichtmineral kann entweder ein kationengetauschtes oder ein anionengetauschtes Schichtmineral sein. Es ist auch möglich, dass der Klebstoff gleichzeitig ein kationengetauschtes Schichtmineral und ein anionengetauschtes Schichtmineral enthält.

Das kationengetauschte Schichtmineral wird hierbei erhalten aus einem Schichtmineral, bei welchem zumindest ein Teil der Kationen durch organische Kationen ausgetauscht worden sind. Beispiele für derartige kationengetauschte Schichtmineralien sind insbesondere diejenigen, welche in US 5707439 oder in US 6197849 erwähnt sind. Dort ist auch das Verfahren zur Herstellung dieser kationengetauschten Schichtminerale beschrieben. Bevorzugt als Schichtmineral ist ein Schichtsilikat. Insbesondere bevorzugt handelt es sich beim Schichtmineral um ein Phyllosilikat, wie sie in US 6197849, Spalte 2, Zeile 38, bis Spalte 3, Zeile 5, beschrieben sind, insbesondere um einen Bentonit. Als besonders geeignet haben sich Schichtmineral wie Kaolinit oder ein Montmorillionit oder ein Hectorit oder ein Illit erwiesen.

Zumindest ein Teil der Kationen des Schichtminerals wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidiniumkationen oder Amidiniumkationen;oder Kationen der N-substituierten Derivate von Pyrrolidin, Piperidin, Piperazin, Morpholin, Thiomorpholin; oder Kationen von 1,4-Diazabicyclo[2.2.2]octan (DABCO) und 1-Azabicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6197849 in Spalte 3, Zeile 6, bis Spalte 4, Zeile 67, offenbart werden.

Bevorzugte kationengetauschte Schichtminerale sind dem Fachmann unter der Bezeichnung Organoclay oder Nanoclay bekannt und sind kommerziell zum Beispiel unter den Gruppennamen Tixogel® (Byk Additives & Instruments) oder Nanofil® (Byk Additives & Instruments), Cloisite® (oder Nanomer® (Nanocor Inc.) oder Garamite® (Byk Additives & Instruments) erhältlich.

Das anionengetauschte Schichtmineral wird erhalten aus einem Schichtmineral, bei welchem zumindest ein Teil der Anionen durch organische Anionen ausgetauscht worden sind. Ein Beispiel für ein anionengetauschtes Schichtmineral ist ein Hydrotalcit, bei dem zumindest ein Teil der Carbonat-Anionen der Zwischenschichten durch organische Anionen ausgetauscht wurden.

Vorteilhaft beträgt der Gesamtanteil des gesamten Füllstoffs 3 bis 50 Gew.-%, vorzugsweise 5 bis 35 Gew.-%, insbesondere 5 bis 25 Gew.-%, bezogen auf das Gewicht der gesamten Zusammensetzung.

Bei den Reaktivverdünnern handelt es sich insbesondere um:
- Glycidylether von monofunktionellen gesättigten oder ungesättigten, verzweigten oder unverzweigten, zyklischen oder offenkettigen C₄-C₃₀-Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂-C₃₀-Alkoholen, insbesondere ausgewählt aus der Gruppe bestehend aus Ethylenglykol-, Butandiol-, Hexandiol-, Octandiolgylcidylether, Cyclohexandimethanoldiglycidylether und Neopentylglycoldiglycidylether.
- Glycidylether von tri- oder polyfunktionellen, gesättigten oder ungesättigten, ver-zweigten oder unverzweigten, zyklischen oder offenkettigen Alkoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen, insbesondere ausgewählt aus der Gruppe bestehend aus Phenylglycidylether, Kresylglycidylether, p-tert.-Butyl-phenylglycidylether, Nonylphenolglycidylether, 3-n-Pentadecenylglycidylether (aus Cashewnuss-Schalen-Öl), N, N-Diglycidylanilin und Triglycidyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäureglycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycoldiglycidylether oder Polypropylenglycodiglycidylether.

Besonders bevorzugt sind Hexandioldiglycidylether, Kresylglycidylether, p-tert.-Butylphenylglycidylether, Polypropylenglycoldiglycidylether und Polyethylenglycoldiglycidylether.

Vorteilhaft beträgt der Gesamtanteil des Reaktivverdünners 0,1 bis 20 Gew.-%, vorzugsweise 1 bis 8 Gew.-%, bezogen auf das Gewicht des gesamten Epoxidharzklebstoffs.

Als Weichmacher eignen sich z.B. Phenolalkylsulfonsäureester oder Benzolsulfonsäure-N-butylamid, die als Mesamoll® bzw. Dellatol BBS von Bayer erhältlich sind. Als Stabilisatoren eignen sich z.B. gegebenenfalls substituierte Phenole, wie Butylhydroxytoluol (BHT) oder Wingstay® T (Elikem), sterisch gehinderte Amine oder N-Oxylverbindungen wie TEMPO (Evonik).

In einer besonderen Ausführungsform enthält der Epoxidharzklebstoff ferner mindestens ein physikalisches oder chemisches Treibmittel, insbesondere in einer Menge von 0,1 bis 3 Gew.-%, bezogen auf das Gewicht des Klebstoffs. Bevorzugte Treibmittel sind chemische Treibmittel, welche beim Erhitzen, insbesondere auf eine Temperatur von 100 bis 200 °C, ein Gas freisetzen. Es kann sich um exotherme Treibmittel handeln, wie z.B. Azoverbindungungen, Hydrazinderivate, Semicarbazide oder Tetrazole. Bevorzugt sind Azodicarbonamid und Oxy-bis(benzolsulfonylhydrazid), die bei der Zersetzung Energie freisetzen. Weiterhin geeignet sind auch endotherme Treibmittel, wie beispielsweise Natriumbicarbonat/ Citronensäure-Mischungen. Derartige chemische Treibmittel sind beispielsweise unter dem Namen Celogen® der Firma Chemtura erhältlich. Ebenfalls geeignet sind physikalische Treibmittel, die unter dem Handelsnamen Expancel® der Firma Akzo Nobel vertrieben werden. Expancel® und Celogen® sind besonders bevorzugt.

Beispielhaft sind in Tabelle 1 Komponenten und Anteile für einen bevorzugten 1K Epoxidharz-Klebstoff, der den erfindungsgemäßen Schlagzähigkeitsmodifikator enthält, aufgeführt.

**Tabelle 1:**

| **VERBINDUNG** | **ANTEILE [GEW.-%]** |
|---|---|
| Basis-Epoxidharz (Flüssigharz, Festharz, epoxidierte Novolake usw.) | 20-60 |
| Erfindungsgemäßer Schlagzähigkeitsmodifikator | 5-60 |
| Reaktivverdünner (z.B. Hexandioldiglycidylether) | 0-15 |
| Diisocyanat | 0-10 |
| CTBN-Derivat (z.B. CTBN Epoxidharz Addukte wie z.B. Polydis Struktol von Schil+Seilmacher) | 0-40 |
| Core-Shell Toughener (z.B. Kaneka MX-125 oder andere Kautschukpartikel als unreaktive Flexibilisatoren) | 0-40 |
| Härter und Katalysatoren | 2-14 |
| Organische oder mineralische Füllstoffe | 0-40 |

Die Aushärtung des erfindungsgemäßen Epoxidharzklebstoffs erfolgt insbesondere durch Erhitzen auf eine Temperatur, welche über der Hitzeaktivierung des thermisch aktivierbaren Härters liegt. Diese Aushärtetemperatur ist vorzugsweise eine Temperatur im Bereich von 110°C bis 220 °C, vorzugsweise 110 bis 180 °C, und besonders bevorzugt im Bereich von 120 °C bis 150°C. Der einkomponentige Epoxidharzklebstoff ist bevorzugt ein tieftemperaturhärtender Epoxidharzklebstoff.

Beansprucht wird weiterhin ein Verfahren zur Verklebung von einem ersten Substrat und einem zweiten Substrat mit einem einkomponentigen Epoxidharzklebstoff wie vorstehen beschrieben, wobei mit dem Epoxidharzklebstoff ein Klebverbund zwischen einer Oberfläche des ersten Substrats und einer Oberfläche des zweiten Substrats gebildet wird und der Klebverbund bei einer Temperatur im Bereich von 110 °C bis 220 °C, bevorzugt 110 bis 180 °C, besonders bevorzugt von 120 bis 150 °C, ausgehärtet wird.

Bei den Substraten kann es sich um beliebige Gegenstände oder Teile handeln. Der erfindungsgemäße einkomponentige Epoxidharzklebstoff kann zum Verkleben von Substraten aus dem gleichen Material oder einem verschiedenen Material verwendet werden.

Die Klebstoffe eignen sich insbesondere zum Verkleben von Substraten für Automobile oder An- oder Einbaumodule für Fahrzeuge. Ferner eignen sich die erfindungsgemäßen Klebstoffe auch für andere Anwendungsgebiete. Besonders zu erwähnen sind verwandte Anwendungen im Transportmittelbau wie Schiffe, Lastwagen, Busse oder Schienenfahrzeuge, im Bau von Gebrauchsgütern wie beispielsweise Waschmaschinen, aber auch im Bausektor, beispielsweise als versteifende Strukturklebstoffe.

Die zu verklebenden Substraten können aus einem beliebigen geeigneten Material sein. Bei den geeigneten Materialien handelt es sich bevorzugt um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Durch die Verwendung des erfindungsgemäßen Schlagzähigkeitsmodifikators in 1K Epoxidharzklebstoffen als Schlagzähigkeitsmodifikator wird eine Zunahme der Zähigkeit im Vergleich zu dem gleichen Epoxidharzklebstoff aber ohne den erfindungsgemäßen Schlagzähigkeitsmodifikator erreicht, insbesondere bei Aushärtungstemperaturen im Bereich von 120 °C bis 150 °C. Erstaunlicherweise wird insbesondere eine verbesserte Tieftemperaturschlagzähigkeit erreicht, z.B. bei einer Temperatur von -10°C oder weniger, insbesondere bei z.B. -30°C.

### Beispiele

Im Folgenden werden einige Beispiele aufgeführt, welche die Erfindung weiter veranschaulichen, den Umfang der Erfindung aber in keiner Weise beschränken sollen. Sofern nicht anders angegeben, beziehen sich alle Anteile und Prozentsätze auf das Gewicht.

Zur Bestimmung von nachstehend angegebenen Parametern wurden folgende Messverfahren verwendet.

### Bestimmung des Isocyanatgehaltes

Der Isocyanatgehalt wurde in Gew.-% mittels einer Rücktitration mit im Überschuss eingesetztem Di-n-butylamin und 0,1 M Salzsäure bestimmt. Alle Bestimmungen wurden halbmanuell auf einem Mettler-Toledo Titrator des Typs DL50 Graphix mit automatischer potentiometrischer Endpunktbestimmung durchgeführt. Dazu wurden jeweils 600-800 mg der zu bestimmenden Probe unter Erwärmen in einer Mischung aus 10 ml Isopropanol und 40 ml Xylol gelöst und anschließend mit einer Lösung von Dibutylamin in Xylol umgesetzt. Überschüssiges Di-n-butylamin wurde mit 0,1M Salzsäure titriert und daraus der Isocyanatgehalt berechnet.

### Zugfestigkeit, Bruchdehnung und E-Modul (DIN EN ISO 527)

Eine Klebstoffprobe wurde zwischen zwei Teflonpapieren auf eine Schichtdicke von 2mm verpresst. Nach 35 min Aushärtung bei 175°C wurden die Teflonpapiere entfernt und die Probekörper nach DIN-Norm Zustand ausgestanzt. Die Prüfkörper wurden unter Normklima mit einer Zuggeschwindigkeit von 2 mm/min gemessen. Die Zugfestigkeit, Bruchdehnung und das E-Modul 0,05-0,25% wurden gemäss DIN EN ISO 527 bestimmt.

### Zugscherfestigkeit (LSS) (DIN EN 1465)

Gereinigte und mit Anticorit PL 3802-39S rückbeölte Prüfbleche von Stahl H420-ZE (Dicke 1,5mm) wurden auf einer Klebfläche von 25 x 10mm mit Glaskugeln als Abstandshalter in einer Schichtdicke von 0,3 mm mit dem Klebstoff verklebt und unter den angegebenen Härtungsbedingungen ausgehärtet. Härtungsbedingungen: a) 10 min bei 130°C Ofentemperatur (Unterhärtung), b) 10 min bei 140°C Ofentemperatur (Unterhärtung), c) 60 min bei 190°C Ofentemperatur (Überhärtung). Die Zugscherfestigkeit wurde auf einer Zugmaschine bei einer Zuggeschwindigkeit von 10mm/min in einer 5-fach Bestimmung gemäss DIN EN 1465 bestimmt.

### Winkelschälfestigkeit (DIN 53281)

Es wurden Prüfbleche a 130 x 25 mm aus Stahl DC-04+ZE (Dicke 0,8mm) präpariert. Prüfbleche wurden auf einer Höhe von 30 mm mit einer geeigneten Stanzmaschine abgewickelt (90°). Die gereinigten und mit Anticorit PL 3802-39S rückbeölten Flächen von 100 x 25 mm wurden mit Glaskugeln als Abstandshalter in einer Schichtdicke von 0,3 mm mit dem Klebstoff verklebt und unter Standardbedingungen (35 min, 175°C Ofentemperatur) ausgehärtet. Die Winkelschälfestigkeit wurde auf einer Zugmaschine mit einer Zuggeschwindigkeit von 10 mm/min in einer 3-fach Bestimmung als Schälkraft in N/mm im Bereich des Traversenweges von 1/6-bis 5/6 Weglänge bestimmt.

### Schlagschälfestigkeit (gemäss SO 11343)

Die Probenkörper wurden mit dem Klebstoff und Stahl DC04+ZE mit dem Mass 90 x 20 x 0,8mm hergestellt. Dabei betrug die Klebfläche 20 x 30mm bei einer Schichtdicke von 0,3mm und Glaskugeln als Abstandshalter. Die Messung der Schlagschälfestigkeit erfolgte jeweils bei den angegebenen Temperaturen (RT = 25°C, -30 °C) als Dreifachbestimmung auf einem Zwick 450 Schlagpendel. Als Schlagschälfestigkeit, wird die gemittelte Kraft in N/mm unter der Messkurve von 25% bis 90% gemäss ISO11343 angegeben.

Die Klebstoffe wurden unter verschiedenen Härtungsbedingungen gehärtet: a) 10 min bei 130°C Ofentemperatur (Unterhärtung), b) 60 min bei 190°C Ofentemperatur (Überhärtung).

### DSC

Glasübergangstemperaturen (Tg) wurden auf einem Differentialscanningkalorimeter (DSC) 822e von Mettler-Toledo mit dem nachfolgenden Programmsegmenten gemessen.
Segment 1: Aufheizphase von 25 auf 175°C mit einer Rate von 40°C/min
Segment 2: Härtung 20 min bei 175°C
Segment 3: Abkühlphase von 175°C auf 20°C mit einer Rate von - 40°C/min
Segment 4: Equilibrationsphase 5 min bei 20°C
Segment 5: Aufheizphase von 20°C auf 200°C mit einer Rate von 20°C/min

Im Segment 5 wurde die Glasübergangstemperatur aus dem Minimum der 1. Ableitungsfunktion ermittelt.

### Viskosität

Viskositätsmessungen an den Klebstoffen erfolgten 1d nach Herstellung auf einem Rheometer vom Typ MCR 101 des Herstellers Anton Paar oszillatorisch unter Verwendung einer Platten-Platten Geometrie bei einer Temperatur von 25°C bzw. 50°C mit folgenden Parametern: 5 Hz, 1 mm Spalt, Platte-Platte-Abstand 25 mm, 1% Deformation.

Zur Bewertung der Stabilität der Klebstoffe wurden die Viskositätsmessung nach Lagerung bei 50 °C bzw. 60 °C für eine Woche wiederholt und der sich nach der Lagerung ergebende prozentuale Viskositätsanstieg ermittelt.

Es werden folgende Abkürzungen verwendet: SB: Standardhärtung, UB: Unterhärtung, OB: Überhärtung.

Für die Herstellung der Schlagzähigkeitsmodifikatoren 1 bis 14 wurden folgende Handelsprodukte verwendet:

**Tabelle 2:**

| Verbindung | Beschreibung | Hersteller |
|---|---|---|
| BHT (Ionol^{®} CP) | Stabilisator Butylhydroxytoluol | Evonik |
| PolyTHF^{®} 2000 | difunktionelles Polytetramethylenetherglykol mit einer Molmasse von 2000 g/mol | BASF |
| Poly bd^{®} R45V | Hydroxyl terminiertes | Cray Valley |
| | Polybutadien mit einer | |
| | Molmasse von 2800 g/mol, | |
| | OH-Funktionalität ca. 2,4-2,6 | |
| Vestanat IPDI | Isophorondiisocyanat | Evonik |
| Dibutylzinndilaurat | Katalysator | Thorson |
| Di-n-butyl-bis(dodecylthio)zinn | Katalysator | ABCR |
| 4-Methoxyphenol | Blockierungsmittel | Rhodia |
| Phenol | Blockierungsmittel | Sigma-Aldrich |
| 2-Benzoxazol inon | Blockierungsmittel | Synthesia |
| 3,5-Dimethylpyrazol | Blockierungsmittel | Sigma-Aldrich |

### Beispiel 1: Schlagzähigkeitsmodifikator SM1 (Methoxyphenol [1,0 eq.] als Blockierungsmittel, Katalysator Bi)

175 g PolyTHF 2000, 175 g Poly bd R45V und 1,75 g BHT als Stabilisator wurden 1h unter minimalem Rühren im Vakuum bei 90 °C entwässert. Anschließend wurden 70,56 g Isophorondiisocyanat (IPDI) und 0,046 g Dibutylzinndilaurat (DBTDL) zugegeben. Die Reaktion wurde 2 h unter Vakuum bei 90 °C bei mäßig starkem Rühren durchgeführt, um ein Isocyanatterminiertes Polymer zu erhalten: Gemessener freier NCO-Gehalt: 3,11 %.

Zu dem erhaltenen NCO-terminierten Polymer wurden 0,655 g Katalysator Bi (Bi(III)neodecanoat enthaltende Lösung, 6 Gew.-% Bismuth (III) in Lösung) und 37,84 g 4-Methoxyphenol (HQMME) gegeben und für 3 h unter Vakuum bei 110 °C die Isocyanatgruppen abreagiert. Gemessener freier NCO-Gehalt: (direkt nach Herstellung) 0,18 %, (1 Tag nach Herstellung) 0,13 %. Viskosität (1 Tag nach Herstellung): 554 Pa*s bei 25°C, 94 Pa*s bei 50°C.

### Beispiel 2: Schlagzähigkeitsmodifikator SM2 (Phenol [1,0 eq.] als Blockierungsmittel, Katalysator Bi)

175 g PolyTHF 2000, 175 g Poly bd R45V und 1,75 g BHT als Stabilisator wurden 1h unter minimalem Rühren im Vakuum bei 90 °C entwässert. Anschließend wurden 70,56 g Isophorondiisocyanat (IPDI) und 0,045 g Dibutylzinndilaurat (DBTDL) zugegeben. Die Reaktion wurde 2 h unter Vakuum bei 90 °C bei mäßig starkem Rühren durchgeführt, um ein Isocyanat-terminiertes Polymer zu erhalten: Gemessener freier NCO-Gehalt: 3,07 %.

Zu dem erhaltenen NCO-terminierten Polymer wurden 0,643 g Katalysator Bi (Bi(III)neodecanoat enthaltende Lösung, 6 Gew.-% Bismuth (III) in Lösung) und 28,85 g Phenol gegeben und für 3 h unter Vakuum bei 110 °C die Isocyanatgruppen abreagiert. Gemessener freier NCO-Gehalt: (direkt nach Herstellung) 0,24 %, (1 Tag nach Herstellung) 0,19%.
Viskosität (1 Tag nach Herstellung): 421 Pa*s bei 25°C, 78 Pa*s bei 50°C.

### Beispiel 3: Schlagzähigkeitsmodifikator SM3 (, 2-Benzoxazolinon [1,0 eq.] als Blockierungsmittel, Katalysator Bi)

175 g PolyTHF 2000, 175 g Poly bd R45V und 1,75 g BHT als Stabilisator wurden 1h unter minimalem Rühren im Vakuum bei 90 °C entwässert. Anschließend wurden 70,56 g Isophorondiisocyanat (IPDI) und 0,045 g Dibutylzinndilaurat (DBTDL) zugegeben. Die Reaktion wurde 2 h unter Vakuum bei 90 °C bei mäßig starkem Rühren durchgeführt, um ein Isocyanat-terminiertes Polymer zu erhalten: Gemessener freier NCO-Gehalt: 3,05 %.

Zu dem erhaltenen NCO-terminierten Polymer wurden 0,660 g Katalysator Bi (Bi(III)neodecanoat enthaltende Lösung, 6 Gew.-% Bismuth (III) in Lösung) und 41,25 g 2-Benzoxazolinon gegeben und für 3 h unter Vakuum bei 110 °C die Isocyanatgruppen abreagiert. Gemessener freier NCO-Gehalt: (direkt nach Herstellung) 0,13 %, (1 Tag nach Herstellung) 0,00 %.
Viskosität (1 Tag nach Herstellung): 422 Pa*s bei 25°C, 82 Pa*s bei 50°C.

### Beispiel 4: Schlagzähigkeitsmodifikator SM4 (3,5 Dimethylpyrazol [1,0 eq.] als Blockierungsmittel, Katalysator Bi)

175 g PolyTHF 2000, 175 g Poly bd R45V und 1,75 g BHT als Stabilisator wurden 1h unter minimalem Rühren im Vakuum bei 90 °C entwässert. Anschließend wurden 70,56 g Isophorondiisocyanat (IPDI) und 0,045 g Dibutylzinndilaurat (DBTDL) zugegeben. Die Reaktion wurde 2 h unter Vakuum bei 90 °C bei mäßig starkem Rühren durchgeführt, um ein Isocyanat-terminiertes Polymer zu erhalten: Gemessener freier NCO-Gehalt: 3,08 %.

Zu dem erhaltenen NCO-terminierten Polymer wurden 0,643 g Katalysator Bi (Bi(III)neodecanoat enthaltende Lösung, 6 Gew.-% Bismuth (III) in Lösung) und 29,65 g 3,5-Dimethylpyrazol gegeben und für 3 h unter Vakuum bei 110 °C die Isocyanatgruppen abreagiert. Gemessener freier NCO-Gehalt: (direkt nach Herstellung) 0,02 %.
Viskosität (1 Tag nach Herstellung): 241 Pa*s bei 25°C, 50 Pa*s bei 50°C.

### Vergleichsbeispiel 1: Schlagzähigkeitsmodifikator SM5 (4-Methoxyphenol als Blockierungsmittel [1,0 eq.], DBTDL Katalysator)

175 g PolyTHF 2000, 175 g Poly bd R45V und 1,75 g BHT als Stabilisator wurden 1h unter minimalem Rühren im Vakuum bei 90 °C entwässert. Anschließend wurden 70,56 g Isophorondiisocyanat (IPDI) und 0,046 g Dibutylzinndilaurat (DBTDL) zugegeben. Die Reaktion wurde 2h unter Vakuum bei 90°C bei mäßig starkem Rühren durchgeführt, um ein Isocyanat-terminiertes Polymer zu erhalten: Gemessener freier NCO-Gehalt: 2,96 %.

Zu dem erhaltenen NCO-terminierten Polymer wurden 0,092 g Dibutylzinndilaurat (DBTDL) und 44,28 g 4-Methoxyphenol gegeben und für 5 h unter Vakuum bei 110 °C die Isocyanatgruppen abreagiert. Gemessener freier NCO-Gehalt: (direkt nach Herstellung) 0,39 %; (1 Tag nach Herstellung) 0,23 %.
Viskosität (1 Tag nach Herstellung): 584 Pa*s bei 25°C, 94 Pa*s bei 50°C.

### Vergleichsbeispiel 2: Schlagzähigkeitsmodifikator SM6 (4-Methoxyphenol [1,0 eq.] als Blockierungsmittel, Di-n-butyl-bis(dodecyl-thio)zinn Katalysator)

175 g PolyTHF 2000, 175 g Poly bd R45V und 1,75 g BHT als Stabilisator wurden 1h unter minimalem Rühren im Vakuum bei 90 °C entwässert. Anschließend wurden 70,56 g Isophorondiisocyanat (IPDI) und 0,046 g Dibutylzinndilaurat (DBTDL) zugegeben. Die Reaktion wurde 2 h unter Vakuum bei 90 °C bei mäßig starkem Rühren durchgeführt, um ein Isocyanat-terminiertes Polymer zu erhalten: Gemessener freier NCO-Gehalt: 2,91 %.

Zu dem erhaltenen NCO-terminierten Polymer wurden 0,116 g Di-n-butyl-bis(dodecylthio)zinn und 36,11 g 4-Methoxyphenol gegeben und für 5 h unter Vakuum bei 110 °C die Isocyanatgruppen abreagiert. Gemessener freier NCO-Gehalt: (direkt nach Herstellung) 0,18 %, (1 Tag nach Herstellung) 0,15 %.
Viskosität (1 Tag nach Herstellung): 672 Pa*s bei 25°C, 104 Pa*s bei 50°C.

### Vergleichsbeispiel 3: Schlagzähigkeitsmodifikator SM7 (Nur PolyTHF als Polyol, 4-Methoxyphenol [1,0 eq] als Blockierungsmittel, Katalysator Bi)

350 g PolyTHF 2000 wurden 1 h unter minimalem Rühren im Vakuum bei 90 °C entwässert. Anschließend wurden 77,00 g Isophorondiisocyanat (IPDI) und 0,047 g Dibutylzinndilaurat (DBTDL) zugegeben. Die Reaktion wurde 2 h unter Vakuum bei 90 °C bei mäßig starkem Rühren durchgeführt, um ein Isocyanat-terminiertes Polymer zu erhalten: Gemessener freier NCO-Gehalt: 3,11 %.

Zu dem erhaltenen NCO-terminierten Polymer wurden 0,670 g Katalysator Bi (Bi(III)neodecanoat enthaltende Lösung, 6 Gew.-% Bismuth (III) in Lösung) und 39,23 g 4-Methoxyphenol gegeben und für 3 h unter Vakuum bei 110 °C die Isocyanatgruppen abreagiert. Gemessener freier NCO-Gehalt: (direkt nach Herstellung) 0,20 %, (1 Tag nach Herstellung) 0,07 %.
Viskosität (1 Tag nach Herstellung): 286 Pa*s bei 25°C, 46 Pa*s bei 50°C.

### Beispiel 5: Schlagzähigkeitsmodifikator SM8 (Poly BD durch Hypro 3000x914 ersetzt, 4-Methoxyphenol [1,0 eq.] als Blockierungsmittel, Katalysator Bi)

175 g PolyTHF 2000, 175 g Hypro 3000X914 (Poly BD - Acrylnitril Co-polymer von Emerald Performance Materials, Mn ca. 3000 g/mol, OH-Funktionalität ca. 2,4, Acrylnitril-Anteil 14 %) und 1,75 g BHT als Stabilisator wurden 1h unter minimalem Rühren im Vakuum bei 90 °C entwässert. Anschließend wurden 65,66 g Isophorondiisocyanat (IPDI) und 0,045 g Dibutylzinndilaurat (DBTDL) zugegeben. Die Reaktion wurde 2 h unter Vakuum bei 90 °C bei mäßig starkem Rühren durchgeführt, um ein Isocyanat-terminiertes Polymer zu erhalten: Gemessener freier NCO-Gehalt: 2,99 %.

Zu dem erhaltenen NCO-terminierten Polymer wurden 0,646 g Katalysator Bi (Bi(III)neodecanoat enthaltende Lösung, 6 Gew.-% Bismuth (III) in Lösung) und 36,69 g 4-Methoxyphenol (HQMME) gegeben und für 2 h unter Vakuum bei 110 °C die Isocyanatgruppen abreagiert. Gemessener freier NCO-Gehalt: (direkt nach Herstellung) 0,13 %, (1 Tag nach Herstellung) 0,06 %.
Viskosität (1 Tag nach Herstellung): 711 Pa*s bei 25°C, 101 Pa*s bei 50°C.

### Beispiele 6 bis 9

Die in den Beispielen 1 bis 4 hergestellten Schlagzähigkeitsmodifikatoren SM1 bis SM4 wurden jeweils zur Herstellung von Klebstoffen gemäß Tabelle 3 verwendet (SM1 für Beispiel 6, SM2 für Beispiel 7, SM3 für Beispiel 8, SM4 für Beispiel 9).

Zusammensetzungen und Anteile für einen 1 K Epoxidharz-Klebstoff, der einen der Schlagzähigkeitsmodifikatoren 1 bis 4 enthält, sind in Tabelle 3 zusammengefasst. SM-X bezieht sich dabei auf die vorstehend hergestellten Schlagzähigkeitsmodifikatoren SM1, SM2 usw.

**Tabelle 3**

| | **Gewichtsteile** | **Chemische Zusammensetzung** | **Funktion** |
|---|---|---|---|
| | 45,0 | Mischung aus Epoxid-harzen basierend auf Bisphenol A | Epoxidharzmatrix |
| | 2,0 | Epoxidgruppen-tragende Reaktivverdünner | Reaktivverdünner |
| | 22,0 | Blockiertes Polyurethan, SM-X | Schlagzähigkeitsmodifikator |
| | 4,1 | Dicyandiamid | Härter |
| | 4,0 | Mischung aus latenten Aminen mit tert Aminogruppen | Latenter Co-Härter mit einer Härtung oberhalb von 120°C |
| | 16,0 | Mineralische Füllstoffe auf Basis von CaCO₃ und Silikaten | Füller |
| | 5,0 | Calciumoxid | Feuchtigkeitsfänger |
| | 8,0 | Pyrogene Kieselsäure | Thixotropiermittel |
| Gesamt: | 106,7 | | |

Die jeweiligen Klebstoffe wurden in einer Ansatzgrösse von 350 g in einem Planetenmischer gemischt. Hierzu wurde die Mischbüchse mit den flüssigen Komponenten gefolgt von den festen Komponenten gefüllt, wobei der Beschleuniger nicht zugesetzt wurde, und unter leichtem Erwärmen bei Temperaturen von nicht mehr als 40 °C gemischt. Nach Erhalt einer homogenen Mischung wurde die Heizvorrichtung abgestellt und der Beschleuniger wurde mit hoher Scherkraft (ca. 80 U/min, Stufe 3,5) zugemischt. Anschliessend wurde der erhaltene Klebstoff in Kartuschen abgefüllt und bei Raumtemperatur gelagert.

Tabelle 4 zeigt die Ergebnisse der Evaluation der erhaltenen Klebstoffe mit den Schlagzähigkeitsmodifikatoren [PolyTHF/PolyBD R45V (1:1), IPDI (0,98 eq.), HQMME (1,0 eq.)] mit verschiedenen Blockierungsmitteln

**Tabelle 4**

| | | **Bsp. 6** | **Bsp. 7** | **Bsp. 8** | **Bsp. 9** |
|---|---|---|---|---|---|
| | Schlagzähigkeitsmodifikator | SM1 | SM2 | SM3 | SM4 |
| | Blockierungsmittel | 4-Methoxyphenol | Phenol | 2-Benz oxazolinon | 3,5-Dimethylpyrazol |
| E-Modul. [MPa] | SB 35' 175°C | 1987 | 1945 | 1785 | 1790 |
| Zugfestigkeit [MPa] | | 31,4 | 30,6 | 31,2 | 29,8 |
| Bruchdehnung [%] | | 7 | 7 | 9 | 5 |
| LSS [MPa] | UB 10' 130°C | 18,2 | 22,0 | 10,0 | 27,1 |
| | UB 10' 140°C | 29,2 | 28,4 | 25,9 | 26,2 |
| | OB 60' 190°C | 28,1 | 27,4 | 26,6 | 25,2 |
| Winkelschälfestigkeit,[N/mm] | SB 35' 175°C | 9,2 100CF | 8,9 100CF | 7,0 100SCF | 6,7 100SCF |
| Schlagschälfestigkeit [N/mm] | UB 10' 130°C RT | 26,4±0,6 | 25,9±0,5 | 22,0±3,4 | 22,7±0,4 |
| | UB 10' 130°C -30°C | 17,8±1,1 | 15,9±1,7 | 7,9±2,1 | 16,2±0,3 |
| | OB 60' 190°C RT | 23,6±0,9 | 22,1±1,0 | 21,5±0,5 | 22,5±0,3 |
| | OB 60' 190°C -30°C | 14,7±1,4 | 13,1±1,1 | 15,0±1,0 | 11,3±0,2 |
| DSC | Tg[°C] | 102 | 103 | 114 | 106 |
| Viskosität | Visk. 25°C [Pa*s] | 1979 | 2000 | 2063 | 1816 |
| | Visk. 50°C [Pa*s] | 507 | 524 | 548 | 485 |
| Stabilität 1w 50°C | Visk. Anstieg 25°C [%] | 23 | 66 | 132 | 470 |
| | Visk. Anstieg 50°C [%] | 15 | 64 | 83 | 275 |
| Stabilität 1w 60°C | Visk. Anstieg 25°C [%] | 83 | 211 | 314 | gehärtet |
| | Visk. Anstieg 50°C [%] | 82 | 245 | 292 | |

### Beispiel 10

Die Herstellung des Schlagzähigkeitsmodifikators SM1 gemäß Beispiel 1 wurde wiederholt, außer dass der Anteil an Blockierungsmittel HQMME (4-Methoxyphenol) bezogen auf die Menge an vorhandenen Isocyanatgruppen des Isocyanat-terminierten Polymers wie in Tabelle 5 angegeben in SM 9 auf 1,2 Äquivalente (NCO/OH Äquivalentenverhältnis) erhöht wurde. Mit SM9 wurde analog zu Beispiel 6 ein Klebstoff hergestellt. In Tabelle 5 werden die Eigenschaften der erhaltenen Klebstoffe aus Beispiel 10 und Beispiel 6 verglichen. Dabei zeigt sich, dass die einkomponentigen Epoxid-Klebstoffzusammensetzungen enthaltend die erfindungsgemässen Schlagzähigkeitsmodifikatoren hohe Festigkeiten und Zugfestigkeiten aufweisen, ohne dass das Blockierungsmittel in grossem Überschuss eingesetzt werden muss.

**Tabelle 5:**

| | | **Bsp.10** | **Bsp. 6** |
|---|---|---|---|
| | Schlagzähigeitsmodifikator | SM9 | SM1 |
| | Menge HQMME | 1,2 eq | 1,0 eq |
| E-Modul. MPa] | SB 35' 175°C | 1543 | 1987 |
| Zugfestigkeit [MPa] | | 28,1 | 31,4 |
| Bruchdehnung [%] | | 5 | 7 |
| LSS [MPa] | UB 10' 130°C | 26,3 | - |
| | UB 10' 140°C | 30,9 | 29,2 |
| | OB 60' 190°C | 26,8 | 28,1 |
| Winkelschälfestigkeit [N/mm] | SB 35' 175°C | 9,7 100CF | 9,2 100CF |
| Schlagschälfestigkeit [N/mm] | UB 10' 130°C RT | 27,9±0,7 | 26,4±0,6 |
| | UB 10' 130°C -30°C | 18,3±0,0 | 17,8±1,1 |
| | OB 60' 190°C RT | 21,8±0,8 | 23,6±0,9 |
| | OB 60' 190° -30°C | 13,4±1,0 | 14,7±1,4 |
| DSC | Tg[°C] | 101 | 102 |
| Viskosität | Visk. 25°C [Pa*s] | 2715 | 1979 |
| | Visk. 50°C [Pa*s] | 656 | 507 |
| Stabilität 1w 50°C | Visk. Anstieg. 25°C [%] | 33 | 23 |
| | Visk. Anstieg 50°C [%] | 19 | 15 |
| Stabilität 1w 60°C | Visk. Anstieg 25 °C [%] | 82 | 83 |
| | Visk. Anstieg 50°C [%] | 56 | 82 |

### Vergleichsbeispiele 4 und 5

Das Beispiel 6 wurde wiederholt, außer dass statt des Schlagzähigkeitsmodifikators SM1 die in den Vergleichsbeispielen 1 und 2 hergestellten Schlagzähigkeitsmodifikatoren SM5 (für Vergleichsbeispiel 4) bzw. SM6 (für Vergleichsbeispiel 5) eingesetzt wurde.

Tabelle 6 zeigt die Bewertungsergebnisse für die so hergestellten Klebstoffe, in der auch die Ergebnisse für Beispiel 6 aufgenommen sind. Tabelle 6 zeigt den Einfluss des Katalysators auf die Blockierungsreaktion und die Eigenschaften des fertigen Epoxidklebstoffes mit dem enthaltenen Schlagzähigkeitsmodifikator (PolyTHF (50), PolyBD (50), IPDI (0,98 eq), HQMME (1,0 eq)).

**Tabelle 6:**

| | | **Vgl.-bsp. 4** | **Vgl.-bsp. 5** | **Bsp. 6** |
|---|---|---|---|---|
| | Schlagzähigkeitsmodifikator | SM5 | SM6 | SM1 |
| | Katalysator für Blockierungsreaktion | DBTDL | Bis(dodecylthio)dibutylzinn | Bi-Kat. |
| E-Modul [MPa] | SB 35' 175°C | 1620 | 1550 | 1987 |
| Zugfestigkeit [MPa] | | 28,1 | 27,4 | 31,4 |
| Bruchdehnung [%] | | 7 | 7 | 7 |
| LSS [MPa] | UB 10' 130°C | 24,2 | 22,8 | 18,6 |
| | UB 10' 140°C | 28,1 | 28,6 | 29,2 |
| | OB 60' 190°C | 27,0 | 27,3 | 28,1 |
| Winkelschälfestigkeit [N/mm] | SB 35' 175°C | 8,9 100CF | 5,6 100CF | 9,2 100CF |
| Schlagschälfestigkeit [N/mm] | UB 10' 130°C RT | 21,8 ±1.1 | 14,2±0,2 | 26,4±0,4 |
| | UB 10' 130°C -30°C | 8.5±1.9 | 7,0±0,0 | 17,8±1,1 |
| | OB 60' 190°C RT | 21.9±0.8 | 20,7±0,8 | 23,6±0,9 |
| | OB 60' 190°C -30°C | 14.7±0.9 | 14,2±1,2 | 14,7±1,4 |
| DSC | Tg [°C] | 105 | 103 | 102 |
| Viskosität | Visk. 25°C [Pa*s] | 2471 | 2387 | 1979 |
| | Visk. 50°C [Pa*s] | 629 | 611 | 507 |
| Stabilität 1w 50°C | Visk. Anstieg 25°C [%] | 52 | 48 | 23 |
| | Visk. Anstieg 50°C [%] | 53 | 50 | 15 |
| Stabilität 1w 60°C | Visk. Anstieg 25°C [%] | Gehärtet | 65 | 83 |
| | Visk. Anstieg 50°C [%] | | 79 | 82 |

Der einkomponentige Epoxidharzklebstoffzusammensetzung enthaltend den erfindungsgemäßen Schlagzähigkeitsmodifikator (Beispiel 6) weist hohe Festigkeiten und Zugfestigkeiten auf, insbesondere eine hohe Schlagschälfestigkeit bei tiefen Temperaturen, sowie eine gute Lagerstabilität.

### Beispiele 11 und 12

In den Beispielen 11 und 12 wurden gemäss Beispiel 6 Formulierungen mit den Schlagzähigkeitsmodifikatoren SM9 und SM10 hergestellt.

SM9 und SM10 wurden analog zu SM1 hergestellt, wobei in SM9 und SM10 im Gegensatz zu SM1 1,2 eq. 4-Methoxyphenol als Blockierungsmittel eingesetzt wurden. In SM10 wurde zusätzlich die Menge an Katalysator Bi (Bi(III)neodecanoat enthaltende Lösung, 6 Gew.-% Bismuth (III) in Lösung) von 0,14% auf 0,5% erhöht, um den Effekt der verwendeten Menge an Katalysator Bi im Blockierungsschritt der Schlagzähigkeitsmodifikatorsynthese zu evaluieren. Dabei zeigte sich, dass mit 0,5 Gewichtsprozenten bereits das mit Katalysator Bi erzielbare Maximum der Performance /Schlagschälfestigkeit überschritten worden war. Eine Menge von 0,14% Katalysator Bi (Bi(III)neodecanoat enthaltende Lösung, 6 Gew.-% Bismuth (III) in Lösung) entspricht dabei einer Menge von 0,05 Gew.-% Bismuth-Katalysator bzw. Bi(III)neodecanoat (Bi-Kat.) und eine Menge von 0,5% Katalysator Bi entspricht einer Menge von 0,18 Gew.-% Bismuth-Katalysator bzw. Bi(III)neodecanoat.

**Tabelle 7:**

| | | **Vgl.-bsp. 4** | **Bsp. 11** | **Bsp. 12** |
|---|---|---|---|---|
| | Schlagzähigkeitsmodifikator | SM5 | SM9 | SM10 |
| | Katalysator für: | | | |
| | - Polyol+IPDI | DBTDL | DBTDL | DBTDL |
| | - Blockierungsreaktion: | DBTDL | Bi-Kat. | Bi-Kat. |
| | | | (0,05%) | (0,18%) |
| E-Modul [MPa] | SB 35' 175°C | 1620 | 1543 | 1700 |
| Zugfestigkeit [MPa] | | 28,1 | 28,1 | 27,4 |
| Bruchdehnung [%] | | 7 | 5 | 5 |
| LSS [MPa] | UB 10' 130°C | 24,2 | 26,3 | 27,9 |
| | UB 10' 140°C | 28,1 | 30,9 | 30,2 |
| | OB 60' 190°C | 27,0 | 26,8 | 27,0 |
| Winkelschälfestigkeit [N/mm] | SB 35' 175°C | 8,9 100CF | 9,7 100CF | 9,5 100CF |
| Schlagschälfestigkeit [N/mm] | UB 10' 130°C RT | 21,8 ±1.1 | 27,9±0,7 | 23,1±0,1 |
| | UB 10' 130°C -30°C | 8.5±1.9 | 18,3±0, | 10,0±0,2 |
| | OB 60' 190°C RT | 21.9±0.8 | 21,8±0,8 | 22,5±0,5 |
| | OB 60' 190°C -30°C | 14.7±0.9 | 13,4±1,0 | 13,9±0,5 |
| DSC | Tg[°C] | 105 | 101 | 100 |
| Viskosität | Visk. 25°C [Pa*s] | 2471 | 79 | 2029 |
| | Visk. 50°C [Pa*s] | 629 | 141 | 624 |
| Stabilität 1w 50°C | Visk. Anstieg 25°C [%] | 52 | 2715 | 56 |
| | Visk. Anstieg 50°C [%] | 53 | 656 | 36 |
| Stabilität 1w 50°C | Visk. Anstieg 25°C [%] | gehärtet | 142 | 82 |
| | Visk. Anstieg 50°C [%] | | 152 | 56 |

### Beispiel 13 und Vergleichsbeispiel 6

Das Beispiel 6 wurde wiederholt, außer dass statt des Schlagzähigkeitsmodifikators SM1 die in Beispiel 5 und in Vergleichsbeispiel 3 hergestellten Schlagzähigkeitsmodifikatoren SM8 (für Beispiel 13) bzw. SM7 (für Vergleichsbeispiel 6) eingesetzt wurden.

Tabelle 8 zeigt die Bewertungsergebnisse für die so hergestellten Klebstoffe, in der auch die Ergebnisse für Beispiel 6 aufgenommen sind.

**Tabelle 8**

| | | **Bsp. 6** | **Bsp. 13** | **Vgl.-bsp. 6** |
|---|---|---|---|---|
| | Schlagzähigkeitsmodifikator | SM1 | SM8 | SM7 |
| | Polyole (Mengenverhältnis) | PolyTHF/ PolyBD R45V (50/50) | PolyTHF/ Hypro 3000x914 (50/50) | PolyTHF (100) |
| E-Modul [MPa] | SB 35' 175°C | 1987 | 1420 | 1760 |
| Zugfestigkeit [MPa] | | 31,4 | 26,9 | 20,5 |
| Bruchdehnung [%] | | 7 | 9 | 2 |
| LSS[MPa] | UB 10' 130°C | 18,2 | 18,4 | 11,8 |
| | UB 10' 140°C | 29,2 | 25,3 | 23,3 |
| | OB 60' 190°C | 28,1 | 22,8 | 19,5 |
| Winkelschälfestigkeit [N/mm] | SB 35' 175°C | 9,2 100CF | 5,8 100CF | 6,2 100CF |
| Schlagschälfestigkeit [N/mm] | UB 10' 130°C RT | 26,4±0,6 | 19,5±1,0 | 5.5±0.7 |
| | UB 10' 130°C -30°C | 17,8±1,1 | 0,9±0,6 | 0.3±0.3 |
| | OB 60' 190°C RT | 23,6±0,9 | 15,9±0,5 | 18.7±1.0 |
| | OB 60' 190°C -30°C | 14,7±1,4 | 5,9±0,2 | 12.6±1.0 |
| DSC | Tg[°C] | 102 | 103 | 100 |
| Viskosität | Visk. 25°C [Pa*s] | 1979 | 2685 | 2062 |
| | Visk. 50°C [Pa*s] | 507 | 601 | 622 |
| Stabilität 1w 50°C | Visk. Anstieg 25°C [%] | 23 | 88 | 44 |
| | Visk. Anstieg 50°C [%] | 15 | 77 | 30 |
| Stabilität 1w 50°C | Visk. Anstieg 25°C [%] | 83 | 241 | 94 |
| | Visk. Anstieg 50°C [%] | 82 | 206 | 60 |

### Vergleichsbeispiele 7 bis 10

Das Beispiel 1 wurde wiederholt, außer dass statt 4-Methoxyphenol die in Tabelle 9 gezeigten Blockierungsmittel verwendet wurden. Es wurden die Schlagzähigkeitsmodifikatoren SM11 bis SM14 erhalten. Für die Schlagzähigkeitsmodifikatoren SM11 und SM12 wurde praktisch keine Blockierung des Isocyanat-terminierten Polymers erreicht, so dass diese Schlagzähigkeitsmodifikatoren nicht weiter untersucht wurden. Mit den Schlagzähigkeitsmodifikatoren SM13 und SM14 wurden wie in Beispiel 6 Klebstoffe hergestellt, außer dass Schlagzähigkeitsmodifikator SM1 durch SM13 bzw. SM14 ersetzt wurde. Die erhaltenen Klebstoffe zeigten keine ausreichende Lagerstabilität (Härtung nach 1 Woche bei 50°C) und wurden daher ebenfalls nicht weiter untersucht.

**Tabelle 9**

| | **Vgl.-bsp. 7** | **Vgl.-bsp. 8** | **Vgl.-bsp. 9** | **Vgl.-bsp. 10** |
|---|---|---|---|---|
| Schlagzähigkeitsmodifikator | SM11 | SM12 | SM13 | SM14 |
| Blockierungsmittel | Dodecanthiol | Ethylacetoacetat | 2-Mercaptopyridin | Tetramethylguanidin |
| NCO-Gehalt<0,25% nach 3h Umsetzung für Blockierung | nein | nein | ja | ja |
| Stabilität 1w 50°C | - | - | nein | nein |

## Patentansprüche

1. Schlagzähigkeitsmodifikator, welcher ein Isocyanat-terminiertes Polymer ist, dessen Isocyanatgruppen durch Umsetzung mit einem Blockierungsmittel teilweise oder vollständig blockiert sind, erhältlich durch
A) Umsetzung von a) zwei oder mehr Polyolen umfassend a1) Polytetramethylenetherglycol und a2) mindestens ein Hydroxy-terminiertes Polybutadien, wobei der Gesamtanteil an Polytetramethylenetherglycol und Hydroxy-terminiertem Polybutadien mindestens 95 Gew.-%, bezogen auf das Gesamtgewicht der Polyole, beträgt, und b) mindestens einem acyclischen aliphatischen oder cycloaliphatischen Polyisocyanat in Gegenwart c) mindestens eines Katalysators unter Bildung eines Isocyanat-terminierten Polymers, und
B) Umsetzung des in Schritt A) erhaltenen Isocyanat-terminierten Polymers mit d) mindestens einem Blockierungsmittel ausgewählt aus der Gruppe bestehend aus Phenolen, 2-Benzoxazolinonen und Pyrazolen in Gegenwart e) mindestens eines organischen Bismuth-Katalysators unter Bildung des teilweise oder vollständig blockierten Isocyanat-terminierten Polymers.

2. Schlagzähigkeitsmodifikator gemäß Anspruch 1, **dadurch gekennzeichnet, dass** das b) mindestens eine acyclische aliphatische oder cycloaliphatische Polyisocyanat Hexamethylendiisocyanat und/oder Isophorondiisocyanat umfasst oder ist.

3. Schlagzähigkeitsmodifikator gemäß mindestens einem der vorhergehenden Ansprüche, **dadurch gekennzeichnet, dass** der c) mindestens eine Katalysator in Schritt A) einen organischen Zinn-Katalysator, bevorzugt Dibutylzinndilaurat, umfasst oder ist.

4. Schlagzähigkeitsmodifikator gemäß mindestens einem der vorhergehenden Ansprüche, **dadurch gekennzeichnet, dass** der e) mindestens eine organische Bismuth-Katalysator Bismuth(III)-neodecanoat umfasst oder ist.

5. Schlagzähigkeitsmodifikator gemäß mindestens einem der vorhergehenden Ansprüche, **dadurch gekennzeichnet, dass** der Anteil des c) mindestens einen Katalysators in Schritt A) im Bereich von 0,5 Gew.-% bis 0,001 Gew.-%, bevorzugt von 0,025 Gew.-% bis 0,005 Gew.-%, bezogen auf die Gesamtmasse des blockierten Schlagzähigkeitsmodifikators, liegt.

6. Schlagzähigkeitsmodifikator gemäß mindestens einem der vorhergehenden Ansprüche, **dadurch gekennzeichnet, dass** der Anteil des katalytisch aktiven Zentrums, insbesondere Bismuth(III), des e) mindestens einen organischen Bismuth-Katalysators in Schritt B) im Bereich von 0,5 Gew.-% bis 0,002 Gew.-%, bevorzugt von 0,1 Gew.-% bis 0,004 Gew.-%, insbesondere bevorzugt von 0,03 Gew.-% bis 0,005 Gew.-%, bezogen auf die Gesamtmasse des blockierten Schlagzähigkeitsmodifikators, liegt.

7. Schlagzähigkeitsmodifikator gemäß mindestens einem der vorhergehenden Ansprüche, **dadurch gekennzeichnet, dass** das d) mindestens eine Blockierungsmittel ausgewählt ist aus Phenol, Kresol, Resorcinol, Brenzkatechin, 3-Pentadecenylphenol, Nonylphenol, 3-Methoxyphenol, 4-Methoxyphenol, mit Styrol oder Dicyclopentadien umgesetzten Phenolen, Bisphenol A, Bisphenol F, 2,2'-Diallyl-bisphenol-A, 2-Benzooxazolinon und 3,5-Dimethylpyrazol, wobei 4-Methoxyphenol bevorzugt ist.

8. Schlagzähigkeitsmodifikator gemäß mindestens einem der vorhergehenden Ansprüche, **dadurch gekennzeichnet, dass** das Gewichtsverhältnis von a1) Polytetramethylenetherglycol zu a2) dem mindestens einen Hydroxy-terminierten Polybutadien im Bereich von 70/30 bis 30/70, bevorzugt von 60/40 bis 40/60, und ganz besonders bevorzugt im Bereich von etwa 50/50, liegt.

9. Schlagzähigkeitsmodifikator gemäß mindestens einem der vorhergehenden Ansprüche, **dadurch gekennzeichnet, dass** in Schritt B) das Äquivalentverhältnis der Isocyanatgruppen des Isocyanat-terminierten Polymers zu den mit Isocyanatgruppen reaktiven Gruppen des Blockierungsmittels im Bereich von 1,5 bis 0,7, bevorzugt von 1,2 bis 0,8, und ganz besonders bevorzugt nahe bei 1:1 liegt.

10. Schlagzähigkeitsmodifikator gemäß mindestens einem der vorhergehenden Ansprüche, **dadurch gekennzeichnet, dass** das in Schritt A) gebildete Isocyanat-terminierte Polymer durchschnittlich 2 bis 4 Polyoleinheiten pro Polymer aufweist.

11. Schlagzähigkeitsmodifikator gemäß mindestens einem der vorhergehenden Ansprüche, **dadurch gekennzeichnet, dass** das Hydroxy-terminierte Polybutadien ein Zahlenmittel des Molekulargewichts (Mn) im Bereich von 2000 bis 4000 g/mol aufweist.

12. Verfahren zur Herstellung eines Schlagzähigkeitsmodifikators gemäß mindestens einem der Ansprüche 1 bis 11, umfassend
A) die Umsetzung von a) zwei oder mehr Polyolen umfassend a1) Polytetramethylenetherglycol und a2) mindestens ein Hydroxy-terminiertes Polybutadien, wobei der Gesamtanteil an Polytetramethylenetherglycol und Hydroxy-terminiertem Polybutadien mindestens 95 Gew.-%, bezogen auf das Gesamtgewicht der Polyole, beträgt, und b) mindestens einem acyclischen aliphatischen oder cycloaliphatischen Polyisocyanat in Gegenwart c) mindestens eines Katalysators unter Bildung eines Isocyanat-terminierten Polymers, und
B) die Umsetzung des in Schritt A) erhaltenen Isocyanat-terminierten Polymers mit d) mindestens einem Blockierungsmittel ausgewählt aus der Gruppe bestehend aus Phenolen, 2-Benzoxazolinonen und Pyrazolen in Gegenwart e) mindestens eines organischen Bismuth-Katalysators unter Bildung des teilweise oder vollständig blockierten Isocyanat-terminierten Polymers.

13. Verwendung eines Schlagzähigkeitsmodifikators nach irgendeinem der Ansprüche 1 bis 11 in einem einkomponentigen Epoxidharzklebstoff zur Verklebung bei einer Aushärtungstemperatur im Bereich von 110 °C bis 220 C, bevorzugt 110 bis 180 °C, besonders bevorzugt von 120 bis 150 °C.

14. Einkomponentiger Epoxidharzklebstoff, umfassend
a) mindestens ein Epoxidharz,
b) mindestens einen Härter für Epoxidharze und
c) einen Schlagzähigkeitsmodifikator nach irgendeinem der Ansprüche 1 bis 11,
wobei der Anteil des Schlagzähigkeitsmodifikators bevorzugt in einem Bereich von 5 bis 60 Gew.-%, bevorzugter 10 bis 25 Gew.-%, liegt.

15. Verfahren zur Verklebung von einem ersten Substrat und einem zweiten Substrat mit einem einkomponentigen Epoxidharzklebstoff nach Anspruch 14, wobei mit dem Epoxidharzklebstoff ein Klebverbund zwischen einer Oberfläche des ersten Substrats und einer Oberfläche des zweiten Substrats gebildet wird und der Klebverbund bei einer Temperatur im Bereich von 110 °C bis 220 °C, bevorzugt 110 bis 180 °C, besonders bevorzugt von 120 bis 150 °C, ausgehärtet wird.
